# EUROPEAN PATENT APPLICATION

(11) **EP 4 550 905 A1**
(43) Date of publication of application: **07.05.2025**
(21) Application number: 22948323.5
(22) Date of filing: 28.06.2022
(51) Int. Cl.: H04W 72/04, H04L 5/00

(54) **METHOD FOR DETERMINING USAGE TIME OF TRANSMISSION CONFIGURATION INDICATION (TCI) STATE, AND APPARATUS THEREFOR**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/102073
(87) International publication number: WO 2024/000203

(57) **Abstract**

Embodiments of the present application disclose a method for determining usage time of a transmission configuration indication (TCI) state, and an apparatus therefor, applicable to the technical field of communications. A method executed by a terminal device comprises: after receiving first indication information used for indicating at least one and/or at least one pair of first TCI states, second indication information used for indicating a second TCI state used when transmitting a specified channel and/or a specified signal may be received, and then usage time of the second TCI state may be determined. Thus, the terminal device and the network device may have a consistent understanding of the usage time of the second TCI state, thereby ensuring that TCI states used by the network device and the terminal device at a same moment are consistent, and improving the performance of TCI state-based transmission.

## Description

### TECHNICAL FIELD

The disclosure relates to the field of communication technology, and in particular to a method and an apparatus for determining application time of a transmission configuration indication (TCI) state.

### BACKGROUND

When resources in frequency range 2 are used for communication, it is necessary to transmit and receive the resources based on beams to ensure the coverage due to rapid attenuation of the high frequency channel. When a channel is configured with a plurality of transmission reception points (TRPs), a plurality of sets of transmission configuration indications (TCIs) may be configured for the channel to improve the transmission performance.

In the case that the channel is dynamic switching between the plurality of TRPs (i.e., multi-TRP) and single TRP, it is necessary to add an independent additional signaling to indicate one or more sets of TCI states from the plurality of sets of TCI states as the TCI state(s) of the TRP(s) after switching. It is an urgent problem that needs to be solved to determine one or more application times of one or more sets of TCI states indicated by the additional signaling.

### SUMMARY

Embodiments of the disclosure provide a method and an apparatus for determining application time of a transmission configuration indication (TCI) state.

According to a first aspect, a method for determining application time of a TCI state, performed by a terminal, is provided in an embodiment of the disclosure. The method includes: receiving first indication information, in which the first indication information indicates at least one first TCI state and/or at least one pair of first TCI states; receiving second indication information, in which the second indication information indicates a second TCI state used by transmission of a designated channel and/or a designated signal, and the second TCI state is a part or all of the first TCI states; and determining application time of the second TCI state.

In the disclosure, after receiving the first indication information that indicates the at least one first TCI state and/or at least one pair of first TCI states, the terminal may receive the second indication information that indicates the second TCI state used by transmission of the designated channel and/or the designated signal, and may determine the application time of the second TCI state. This ensures that the terminal and the network device have a consistent understanding of the application time of the second TCI state, thus ensuring that the network device and the terminal use the same TCI state at the same moment, which improves the performance of the transmission based on the TCI state.

According to a second aspect, another method for determining application time of a TCI state, performed by a network device, is provided in an embodiment of the disclosure. The method includes: sending first indication information, in which the first indication information indicates at least one first TCI state and/or at least one pair of first TCI states; sending second indication information, in which the second indication information indicates a second TCI state used by transmission of a designated channel and/or a designated signal, and the second TCI state is a part or all of the first TCI states; and determining application time of the second TCI state.

In the disclosure, after sending the first indication information that indicates the at least one first TCI state and/or at least one pair of first TCI states, the network device may send the second indication information that indicates the second TCI state used by transmission of the designated channel and/or the designated signal to the terminal, and may determine the application time of the second TCI state. This ensures that the terminal and the network device have a consistent understanding of the application time of the second TCI state, thus ensuring that the network device and the terminal use the same TCI state at the same moment, which improves the performance of the transmission based on the TCI state.

According to a third aspect, an communication apparatus is provided in an embodiment of the disclosure. The apparatus includes: a transceiver module, configured to receive first indication information, in which the first indication information indicates at least one first TCI state and/or at least one pair of first TCI states; in which the transceiver module is configured to receive second indication information, in which the second indication information indicates a second TCI state used by transmission of a designated channel and/or a designated signal, and the second TCI state is a part or all of the first TCI states; and a processing module, configured to determine application time of the second TCI state.

According to a fourth aspect, an communication apparatus is provided in an embodiment of the disclosure. The apparatus includes: a transceiver module, configured to send first indication information, in which the first indication information indicates at least one first TCI state and/or at least one pair of first TCI states; in which the transceiver module is configured to send second indication information, in which the second indication information indicates a second TCI state used by transmission of a designated channel and/or a designated signal, and the second TCI state is a part or all of the first TCI states; and a processing module, configured to determine application time of the second TCI state.

According to a fifth aspect, a communication device is provided in an embodiment of the disclosure. The communication device includes a processor, and when the processor calls a computer program stored in a memory, the method according to the first aspect is implemented.

According to a sixth aspect, a communication device is provided in an embodiment of the disclosure. The communication device includes a processor, and when the processor calls a computer program stored in a memory, the method according to the second aspect is implemented.

According to a seventh aspect, a communication device is provided in an embodiment of the disclosure. The communication device includes a processor and a memory for storing a computer program, and when the computer program is executed by the processor, the communication device is caused to execute the method according to the first aspect.

According to an eighth aspect, a communication device is provided in an embodiment of the disclosure. The communication device includes a processor and a memory for storing a computer program, and when the computer program is executed by the processor, the communication device is caused to execute the method according to the second aspect.

According to a ninth aspect, a communication device is provided in an embodiment of the disclosure. The communication device includes a processor and an interface circuit; in which the interface circuit is configured to receive code instructions and transmit the code instructions to the processor; and when the processor is configured to run the code instructions, the communication device is caused to execute the method according to the first aspect.

According to a tenth aspect, a communication device is provided in an embodiment of the disclosure. The communication device includes a processor and an interface circuit; in which the interface circuit is configured to receive code instructions and transmit the code instructions to the processor; and when the processor is configured to run the code instructions, the communication device is caused to execute the method according to the second aspect.

According to an eleventh aspect, a system for determining application time of a TCI state is provided in an embodiment of the disclosure. The system includes the communication apparatus according to the third aspect and the communication apparatus according to the fourth aspect, or, the system includes the communication device according to the fifth aspect and the communication device according to the sixth aspect, or, the system includes the communication device according to the seventh aspect and the communication device according to the eighth aspect, or, the system includes the communication device according to the ninth aspect and the communication device according to the tenth aspect.

According to a twelfth aspect, a computer-readable storage medium is provided in an embodiment of the disclosure. The computer-readable storage medium is configured to store instructions used by the terminal, in which when the instructions are executed, the terminal is caused to execute the method according to the first aspect.

According to a thirteenth aspect, a computer-readable storage medium is provided in an embodiment of the disclosure. The computer-readable storage medium is configured to store instructions used by the network device, in which when the instructions are executed, the network device is caused to execute the method according to the second aspect.

According to a fourteenth aspect, a computer program product is provided in an embodiment of the disclosure. The computer program product includes a computer program that, when executed on a computer, causes the computer to execute the method according to the first aspect.

According to a fifteenth aspect, a computer program product is provided in an embodiment of the disclosure. The computer program product includes a computer program that, when executed on a computer, causes the computer to execute the method according to the second aspect.

According to a sixteenth aspect, a chip system is provided in an embodiment of the disclosure. The chip system includes at least one processor and an interface, configured to support the terminal to implement the functions involved in the first aspect, for example, to determine or process at least one of the data or information involved in the method described above. In one possible design, the chip system further includes a memory, configured to store the necessary computer programs and data for the terminal. The chip system may be consisted of chips or may include chips and other discrete devices.

According to a seventeenth aspect, a chip system is provided in an embodiment of the disclosure. The chip system includes at least one processor and an interface, configured to support the network device to implement the functions involved in the second aspect, for example, to determine or process at least one of the data or information involved in the method described above. In one possible design, the chip system further includes a memory, configured to store the necessary computer programs and data for the network device. The chip system may be consisted of chips or may include chips and other discrete devices.

According to an eighteenth aspect, a computer program is provided in an embodiment of the disclosure, which, when running on a computer, causes the computer to implement the method according to the first aspect.

According to a nineteenth aspect, a computer program is provided in an embodiment of the disclosure, which, when running on a computer, causes the computer to implement the method according to the second aspect.

### BRIEF DESCRIPTION OF THE DRAWINGS

In order to clearly illustrate a technical solution of embodiments of the disclosure or the related art, description is made below to accompanying drawings used in the embodiments of the disclosure or the related art.
FIG. 1 is a architecture diagram illustrating a communication system according to an embodiment of the disclosure.
FIG. 2 is a flow chart illustrating a method for determining application time of a transmission configuration indication (TCI) state according to an embodiment of the disclosure.
FIG. 3 is a flow chart illustrating another method for determining application time of a TCI state according to an embodiment of the disclosure.
FIG. 4 is a flow chart illustrating another method for determining application time of a TCI state according to an embodiment of the disclosure.
FIG. 5 is a flow chart illustrating another method for determining application time of a TCI state according to an embodiment of the disclosure.
FIG. 6 is a flow chart illustrating another method for determining application time of a TCI state according to an embodiment of the disclosure.
FIG. 7 is a flow chart illustrating another method for determining application time of a TCI state according to an embodiment of the disclosure.
FIG. 8 is a flow chart illustrating another method for determining application time of a TCI state according to an embodiment of the disclosure.
FIG. 9 is a flow chart illustrating another method for determining application time of a TCI state according to an embodiment of the disclosure.
FIG. 10 is a flow chart illustrating another method for determining application time of a TCI state according to an embodiment of the disclosure.
FIG. 11 is a flow chart illustrating another method for determining application time of a TCI state according to an embodiment of the disclosure.
FIG. 12 is a flow chart illustrating another method for determining application time of a TCI state according to an embodiment of the disclosure.
FIG. 13 is a flow chart illustrating another method for determining application time of a TCI state according to an embodiment of the disclosure.
FIG. 14 is a flow chart illustrating another method for determining application time of a TCI state according to an embodiment of the disclosure.
FIG. 15 is a flow chart illustrating another method for determining application time of a TCI state according to an embodiment of the disclosure.
FIG. 16 is a flow chart illustrating another method for determining application time of a TCI state according to an embodiment of the disclosure.
FIG. 17 is a flow chart illustrating another method for determining application time of a TCI state according to an embodiment of the disclosure.
FIG. 18 is a block diagram illustrating an communication apparatus according to an embodiment of the disclosure.
FIG. 19 is a structural block diagram illustrating a communication device according to another embodiment of the disclosure.
FIG. 20 is a structural block diagram illustrating a chip according to an embodiment of the disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of apparatuses and methods consistent with aspects of the embodiments of the disclosure as recited in the appended claims.

For ease of understanding, terms involved in the disclosure are first introduced.

### 1. Transmission configuration indication (TCI).

The TCI is configured to inform the terminal that a demodulation reference signal (DMRS) corresponding to a physical downlink control channel (PDCCH) and a physical downlink shared channel (PDSCH) has a Quasi-Colocation (QCL) with which synchronization signal block (SSB) or which channel state information reference signal (CSI-RS) sent by the network device; or the TCI is configured to inform the terminal that a DMRS corresponding to a physical uplink control channel (PUCCH) and a physical uplink shared channel (PUSCH) has a QCL with which reference signal (e.g., sounding reference signal (SRS)) sent by the terminal, or with which SSB or CSI-RS sent by the base station. The QCL includes one of the following transmission parameters: an average delay, a delay spread, a Doppler shift, a Doppler spread, spatial relation information, or a spatial reception parameter.

### 2. Transmission reception point (TRP).

The TRP is equivalent to a conventional base station, but in some cases, a cell may be covered by more than one TRP, but by a combination of a plurality of TRPs.

### 3. Downlink control information (DCI).

The DCI is carried by the PDCCH, and is sent to the terminal by the network device. The DCI may include uplink and downlink resource allocation, hybrid automatic repeat request (HARQ) information, a power control and etc.

### 4. Reference signal (RS).

The RS is the "pilot" signal, which is a known signal provided by the sender to the receiver for channel estimation or channel detection. The RS may be used for coherent detection and demodulation, beam measurement, channel state information measurement of the terminal, or coherent detection and monitoring, or channel quality measurement of the network device.

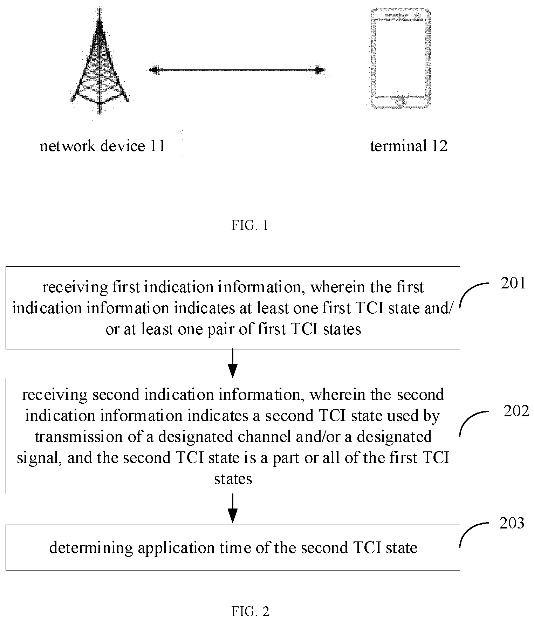

Referring to FIG. 1, it is a schematic diagram illustrating a communication system according to an embodiment of the disclosure. The communication system may include, but is not limited to, one network device such as a TRP and one terminal. The number and form of devices illustrated in FIG. 1 are only for examples and do not constitute a limitation on embodiments of the disclosure, and two or more network devices and two or more terminals may be included in a practical application. The communication system illustrated in FIG. 1 takes an example of including one network device 11 and one terminal 12.

It should be noted that an technical solution of embodiments of the disclosure may be applied to various communication systems, such as a long term evolution (LTE) system, a fifth generation (5G) mobile communication system, a 5G new radio (NR) system, or other future new mobile communication systems.

The network device 11 in embodiments of the disclosure may include an evolved NodeB (eNB), a transmission reception point (TRP), a next generation NodeB (gNB) in an NR system, a base station in other future mobile communication systems or an access node in a wireless fidelity (WiFi) system, etc. The detailed technology and detailed device form employed by the network device are not limited in embodiments of the disclosure. The network device in embodiments of the disclosure may be consisted of a central unit (CU) and a distributed unit (DU). The CU may also be referred to as a control unit. The CU-DU structure may be configured to split a protocol layer of the network device, such as a base station, so that a part of functions of the protocol layer are centrally controlled by the CU, while part or all of remaining functions of the protocol layer are distributed in the DU. The DU is controlled by the CU.

The terminal 12 in embodiments of the disclosure is an entity in a user side for receiving or sending signals, such as a mobile phone. The terminal device may also be referred to as a terminal, a user equipment (UE), a mobile station (MS), a mobile terminal (MT), and the like. The terminal may be an automobile with a communication function, a smart car, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. The detailed technology and detailed device form employed by the terminal are not limited in embodiments of the disclosure.

It should be understood that the communication system described in the embodiments of the disclosure is intended to more clearly illustrate the technical solutions of the embodiments of the disclosure, and does not constitute a limitation on the technical solutions according to embodiments of the disclosure. Those skilled in the art understand that the technical solutions according to embodiments of the disclosure are also applicable to similar technical problems, with the evolution of system architecture and the emergence of a new service scenario.

In general, in the case that the channel is dynamic switching between the multi-TRP and single TRP, and independent additional signaling is added to indicate and use one or more sets of TCI states from the plurality of sets of TCI states as the TCI state(s) of the TRP(s) after switching, since the application time of each TCI state indicated by the additional signaling is uncertain, it may cause that the terminal and the network device use different TCI states at the same moment, and thus may affect the performance of the transmission based on the TCI state.

In the disclosure, the application time of the TCI state indicated by the additional signaling may be accurately determined, so as to ensure that the terminal and the network device have a consistent understanding of the application time of the second TCI state, thus ensuring that the network device and the terminal use the same TCI state at the same moment, which improves the performance of the transmission based on the TCI state.

It should be noted that the method for determining application time of a TCI state provided in any one of the embodiments in the disclosure may be implemented alone, or in combination with possible implementations in other embodiments, and may also be implemented in combination with any of the technical solutions in the related art.

Embodiments of the disclosure are further described in combination with the accompanying drawings and specific embodiments.

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of apparatuses and methods consistent with aspects of the embodiments of the disclosure as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a/an" and "the/said" are also intended to include the plural forms unless the context clearly dictates otherwise. It should also be understood that the term "and/or" as used herein refers to and includes any and all possible combinations of one or more of the associated listed items.

Depending on the context, the words "if" and "in response to" used here may be construed as "in a case that" or "when" or "in response to a determination".

Embodiments of the disclosure are described in detail below, and examples of the embodiments are illustrated in the accompanying drawings, throughout which the same or similar numbers indicate the same or similar elements. The embodiments described below by reference to the accompanying drawings are exemplary and are intended to be used to explain the disclosure and are not to be construed as a limitation of the disclosure.

Referring to FIG. 2, it is a flow chart illustrating a method for determining application time of a TCI state according to an embodiment of the disclosure. The method is performed by a terminal. As shown in FIG. 2, the method may include, but is not limited to, the following steps 201 to 203.

At step 201, first indication information is received, in which the first indication information indicates at least one first TCI state and/or at least one pair of first TCI states.

The one TCI state may be a joint TCI state, a downlink (DL) TCI state, or an uplink (UL) TCI state. The pair of TCI states may be a DL TCI state and a UL TCI state.

At step 202, second indication information is received, in which the second indication information indicates a second TCI state used by transmission of a designated channel and/or a designated signal, and the second TCI state is a part or all of the first TCI states.

The designated channel may include at least one of: a PDCCH, a PDSCH, a PUCCH, or a PUSCH. The designated signal may be a CSI-RS, SRS, a positioning reference signal (PRS), a tracking reference signal (TRS), and etc. This is not limited in the disclosure.

In the disclosure, the part or all of the first TCI states may be used by transmission of each designated channel and/or each designated signal, and thus the network device may indicate the second TCI state used by transmission of a designated channel and/or a designated signal by sending the second indication information to the terminal. For example, if the first TCI states includes two TCI states, the second indication information indicates that the second TCI state is the first one of the two TCI states; or the second indication information indicates that the second TCI state is the second one of the two TCI states; or the second indication information indicates that the second TCI states are the two TCI states of the first TCI states.

Optionally, for the PDCCH, the network device may send at least one piece of second indication information to the terminal, for indicating a TCI state used by PDCCH transmission corresponding to a control resource set (CORESET) identity (ID); or a TCI state used by PDCCH transmission corresponding to a CORESET pool index; or a TCI state used by PDCCH transmission corresponding to a search space (SS) set group ID; or a TCI state used by PDCCH transmission corresponding to a CORESET group ID.

Optionally, for the PUSCH, the network device may send at least one piece of second indication information to the terminal, for indicating a TCI state used by PUSCH transmission with dynamic scheduling; or a TCI state used by PUSCH transmission with a configured grant type 1; or a TCI state used by PUSCH transmission of a configured grant type 2.

At step 203, application time of the second TCI state is determined.

In the disclosure, after determining the second TCI state used by transmission of each designated channel and/or each designated signal, the terminal may determine the application time of the second TCI state based on a designated rule or a protocol agreement. Accordingly, the network device may determine the application time of the second TCI state based on the designated rule or the protocol agreement, thus ensuring that the terminal and the network device have a consistent understanding of the application time of the second TCI state.

For example, it is determined that the application time of the second TCI state is located after a designated number of slots following a slot occupied by a PUCCH corresponding to a HARQ acknowledge (ACK). The HARQ ACK may be a HARQ ACK that includes a second TCI state signaling.

In the disclosure, after receiving the first indication information that indicates the at least one first TCI state and/or at least one pair of first TCI states, the terminal may receive the second indication information that indicates the second TCI state used by transmission of the designated channel and/or the designated signal, and may determine the application time of the second TCI state. This ensures that the terminal and the network device have a consistent understanding of the application time of the second TCI state, thus ensuring that the network device and the terminal use the same TCI state at the same moment, which improves the performance of the transmission based on the TCI state.

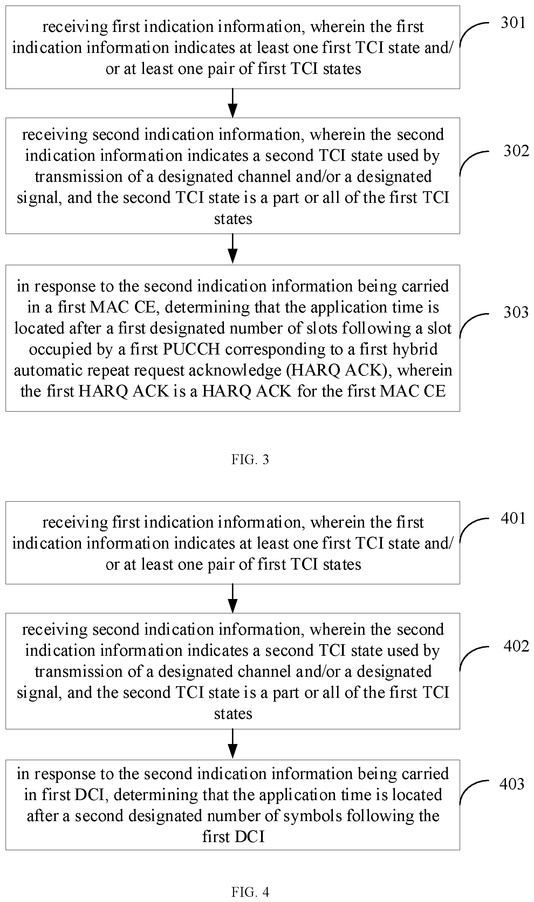

Referring to FIG. 3, it is a flow chart illustrating a method for determining application time of a TCI state according to an embodiment of the disclosure. The method is performed by a terminal. As shown in FIG. 3, the method may include, but is not limited to, the following steps 301 to 303.

At step 301, first indication information is received, in which the first indication information indicates at least one first TCI state and/or at least one pair of first TCI states.

At step 302, second indication information is received, in which the second indication information indicates a second TCI state used by transmission of a designated channel and/or a designated signal, and the second TCI state is a part or all of the first TCI states.

In the disclosure, the specific implementation process of step 301 to step 302 may be found in the detailed description of any embodiments of the disclosure, and will not be repeated herein.

At step 303, in response to the second indication information being carried in a first media access control (MAC) control element (CE), it is determined that the application time is located after a first designated number of slots following a slot occupied by a first PUCCH corresponding to a first HARQ ACK, in which the first HARQ ACK is a HARQ ACK for the first MAC CE.

Optionally, the network device may configure the second indication information in a MAC CE. Thus, when receiving the MAC CE, the terminal may determine the second TCI state in the second indication information.

When the second indication information is carried in the first MAC CE, the terminal, after receiving the first MAC CE, may return to the network device a first HARQ ACK for the first MAC CE. Thus, the application time of the second TCI state may be determined as being located after the first designated number of slots following the slot occupied by the first PUCCH corresponding to the first HARQ ACK. Thus, both the terminal and the network device may determine the application time of the second TCI state based on the slot occupied by the first PUCCH and the first designated number of slots. This ensures that the terminal and the network device have a consistent understanding of the application time of the second TCI state, thus ensuring that the network device and the terminal use the same TCI state at the same moment, which improves the performance of the transmission based on the TCI state. In addition, the first designated number may be pre-configured, or agreed upon by the protocol, or indicated by the network device. This is not limited in the disclosure.

For example, if the first designated number is 3, the slot occupied by the first PUCCH is the first slot, and the application time of the second TCI state is a slot starting from the 5^{th} slot.

In addition, when it is preset that the second TCI state starts to be used after a preset duration following the slot occupied by the first PUCCH, and since a number of slots included in one subframe has a correlation with a sub-carrier spacing (SCS), the first designated number may be determined based on the SCS of the first PUCCH. The correspondence between the number of slots included in one subframe, i.e., 1 ms, and the SCS is shown in Table 1.

**Table 1**

| ***µ*** | **SCS** | **number of slots included in one subframe** |
|---|---|---|
| 0 | 15KHz | 1 |
| 1 | 30KHz | 2 |
| 2 | 60KHz | 4 |
| 3 | 120KHz | 8 |
| 4 | 240KHz | 16 |
| 5 | 480KHz | 32 |

For example, when it is preset that the second TCI state starts to be used after 3ms following the slot occupied by the first PUCCH and the corresponding value *µ* of the SCS is 1, it may be determined that the number of slots included in each subframe at this time is 2 based on Table 1. Since the length of one subframe is 1 ms, it is then determined that the 3 ms includes 3 subframes, and the 3 ms includes 6 slots. Thus, it may be determined that the second TCI state may start to be used after the 6^{th} slot following the slot occupied by the first PUCCH, that is, the second TCI state may be used at the earliest at the 7^{th} slot following the slot occupied by the first PUCCH.

Optionally, the first MAC CE may further carry the first indication information, i.e., the first indication information and the second indication information are carried in the same MAC CE. The application time of the first TCI state may be located after a preset designated number of slots following the slot occupied by the first PUCCH corresponding to the first HARQ ACK. In addition, the preset designated number may be the same as or different from the first designated number, i.e., the application time of the first TCI state is the same as or different from the application time of the second TCI state. This is not limited in the disclosure.

Optionally, the first indication information and the second indication information may be configured in different MAC CEs. The first indication information may be configured in a second MAC CE, to indicate the first TCI state using the second MAC CE.

Optionally, one codepoint in the TCI field in the DCI may correspond to a plurality of TCI states; or one codepoint in the TCI field in the DCI may correspond to a plurality of pairs of TCI states; or one codepoint in the TCI field in the DCI may correspond to one TCI state and one pair of TCI states; or one codepoint in the TCI field in the DCI may correspond to the plurality of TCI states and the plurality of pairs of TCI states; or one codepoint in the TCI field in the DCI may correspond to one TCI state and the plurality of pairs of TCI states; or one codepoint in the TCI field in the DCI may correspond to the plurality of TCI states and one pair of TCI states, and etc. Thus, the first indication information may be carried in a second MAC CE and first DCI. The second MAC CE is configured to activate at least one first TCI state and/or at least one pair of first TCI states corresponding to each of the plurality of codepoints in the TCI field in the first DCI. The first DCI is configured to indicate one codepoint of the plurality of codepoints.

That is, the network device may first activate the at least one first TCI state and/or at least one pair of first TCI states corresponding to the plurality of codepoints via the second MAC CE, and then indicate one codepoint of the plurality of codepoints via the DCI. Thus, the terminal may determine the first TCI state based on the at least one first TCI state and/or at least one pair of first TCI states corresponding to the indicated one codepoint. Further, the terminal receives the second indication information. The second indication information indicates a second TCI state. The second TCI state is a part or all of the first TCI states. Thus, the terminal determines the second TCI state corresponding to the designated channel or the designated signal based on the first indication information and the second indication information, i.e., clearly specifies which designated channel or designated signal is quasi-co-located with the reference signal indicated by which TCI state or which pair of TCI states.

It should be noted that the first indication information and the second indication information are independently indicated by the network device.

In an embodiment, if at the current moment, the network device indicates a new first TCI state and the second TCI state remains unchanged, the first TCI state and/or the second TCI state corresponding to the next moment may be determined based on the next moment and the application time of the first TCI state. For example, at a first time, the first TCI states are TCI#1 and TCI#2, and the second TCI state is the first one of the first TCI states, i.e., TCI#1. At a second time, the network device sends the first indication information indicating that the first TCI states are TCI#3 and TCI#4, and does not send the second indication information. Then at a third time, if the third time is before the application time of the first TCI state, the first TCI states still are TCI#1 and TCI#2, and the second TCI state is the first one of the first TCI states, i.e., TCI#1. If the third time is after the application time of the first TCI state, the first TCI states are TCI#3 and TCI#4, and the second TCI state is the first one of the first TCI state, i.e., TCI#3.

In an embodiment, if at the current moment, the network device indicates a new second TCI state and the first TCI state remains unchanged, the second TCI state corresponding to the next moment may be determined based on the next moment and the application time of the second TCI state. For example, at a first time, the first TCI states are TCI#1 and TCI#2, and the second TCI state is the first one of the first TCI states, i.e., TCI#1. At a second time, the network device does not send the first indication information, but sends the second indication information indicating that the second TCI state is the second one of the first TCI states. Then at a third time, if the third time is before the application time of the second TCI state, the second TCI state is the first one of the first TCI states, i.e., TCI#1. If the third time is after the application time of the second TCI state, the second TCI state is the second one of the first TCI states, i.e., TCI#2.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. For example, at a first time, the first TCI states are TCI#1 and TCI#2, and the second TCI state is the first one of the first TCI states, i.e., TCI#1. At a second time, the network device sends the first indication information indicating that the first TCI states are TCI#3 and TCI#4, and sends the second indication information indicating that the second TCI state is the second one of the first TCI states. Then at a third time, if the third time is before the application time of the first TCI state and the application time of the second TCI state, then the first TCI states are TCI#1 and TCI#2, and the second TCI state is the first one of the first TCI states, i.e., TCI#1. If the third time is after the application time of the first TCI state and before the application time of the second TCI state, then the first TCI states are TCI#3 and TCI#4, and the second TCI state is the first one of the first TCI states, i.e., TCI#3. If the third time is before the application time of the first TCI state and after the application time of the second TCI state, then the first TCI states are TCI#1 and TCI#2, and the second TCI state is the second one of the first TCI states, i.e., TCI#2. If the third time is after the application time of the first TCI state and after the application time of the second TCI state, then the first TCI states are TCI#3 and TCI#4, and the second TCI state is the second one of the first TCI states, i.e., TCI#4.

In the disclosure, after receiving the first indication information that indicates the at least one first TCI state and/or at least one pair of first TCI states, the terminal may receive the second indication information that indicates the second TCI state used by transmission of the designated channel and/or the designated signal, and in the case that the second indication information is carried in the first MAC CE, it is determined that the application time is located after the first designated number of slots following the slot occupied by the first PUCCH corresponding to the first HARQ ACK. This may ensure that the terminal and the network device have a consistent understanding of the application time of the second TCI state, thus ensuring that the network device and the terminal use the same TCI state at the same moment, which improves the performance of the transmission based on the TCI state.

Referring to FIG. 4, it is a flow chart illustrating a method for determining application time of a TCI state according to an embodiment of the disclosure. The method is performed by a terminal. As shown in FIG. 4, the method may include, but is not limited to, the following steps 401 to 403.

At step 401, first indication information is received, in which the first indication information indicates at least one first TCI state and/or at least one pair of first TCI states.

At step 402, second indication information is received, in which the second indication information indicates a second TCI state used by transmission of a designated channel and/or a designated signal, and the second TCI state is a part or all of the first TCI states.

In the disclosure, the specific implementation process of step 401 to step 402 may be found in the detailed description of any embodiments of the disclosure, and will not be repeated herein.

At step 403, in response to the second indication information being carried in first DCI, it is determined that the application time is located after a second designated number of symbols following the first DCI.

In the disclosure, the network device may configure the second indication information in the first DCI which is sent to the terminal. The terminal and the network device may determine the application time of the second TCI state as being located after the second designated number of symbols following the first DCI. This ensures that the terminal and the network device have a consistent understanding of the application time of the second TCI state, thus ensuring that the network device and the terminal use the same TCI state at the same moment, which improves the performance of the transmission based on the TCI state.

The application time may be located after a first symbol of the first DCI, or after a last symbol of the first DCI. When the first DCI includes a plurality of PDCCH candidates, the last symbol of the first DCI is the last symbol occupied by a PDCCH candidate with a later end time. In addition, the second designated number may be pre-configured, or agreed upon by the protocol, or indicated by the network device. This is not limited in the disclosure. Optionally, the first indication information may be carried in the first DCI, i.e., the first indication information and the second indication information are carried in the same DCI. The application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI. In addition, the fifth designated number and the second designated number may be the same or different, i.e., the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state and/or the second TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein. In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is carried in the first DCI, it is determined that the application time is located after a second designated number of symbols following the first DCI. This may ensure that the terminal and the network device have a consistent understanding of the application time of the second TCI state, thus ensuring that the network device and the terminal use the same TCI state at the same moment, which improves the performance of the transmission based on the TCI state.

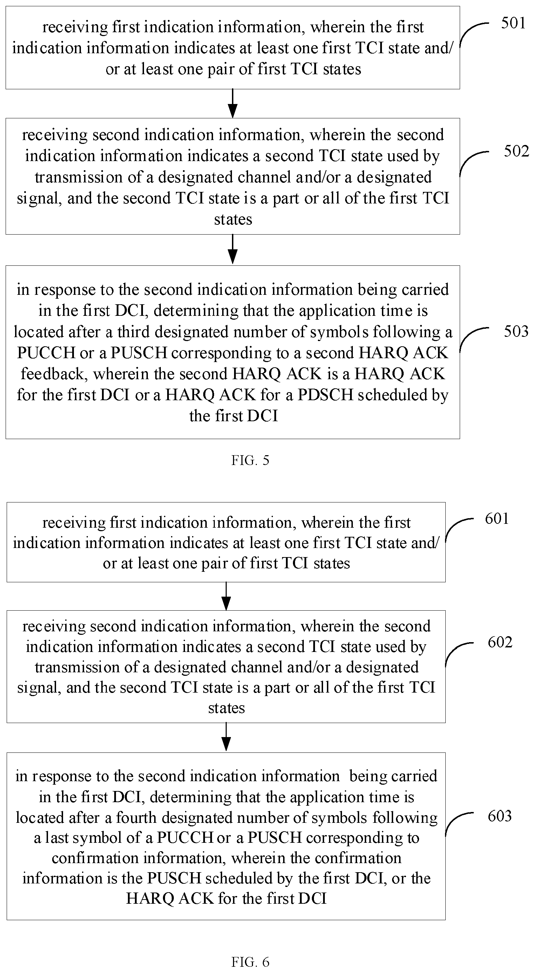

Referring to FIG. 5, it is a flow chart illustrating a method for determining application time of a TCI state according to an embodiment of the disclosure. The method is performed by a terminal. As shown in FIG. 5, the method may include, but is not limited to, the following steps 501 to 503.

At step 501, first indication information is received, in which the first indication information indicates at least one first TCI state and/or at least one pair of first TCI states.

At step 502, second indication information is received, in which the second indication information indicates a second TCI state used by transmission of a designated channel and/or a designated signal, and the second TCI state is a part or all of the first TCI states.

In the disclosure, the specific implementation process of step 501 to step 502 may be found in the detailed description of any embodiments of the disclosure, and will not be repeated herein.

At step 503, in response to the second indication information being carried in the first DCI, it is determined that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI.

In the disclosure, when the first DCI including the second indication information is DL DCI, after receiving the first DCI, the terminal may return the second HARQ ACK to the network device, in which the second HARQ ACK is the HARQ ACK for the first DCI or the HARQ ACK for the PDSCH scheduled by the first DCI. Accordingly, the terminal and the network device may determine a slot and/or a symbol located after the third designated number of symbols following the PUCCH or the PUSCH corresponding to the second HARQ ACK feedback as the application time of the second TCI state. The second HARQ ACK is the HARQ ACK for the first DCI or the HARQ ACK for the PDSCH scheduled by the first DCI. The third designated number may be pre-configured, or agreed upon by the protocol, or indicated by the network device. This is not limited in the disclosure.

For example, in the case that a slot includes 14 symbols and the third designated number is 7, and if the PUCCH or the PUSCH corresponding to the second HARQ ACK feedback is located at the 2^{nd} symbol in the 1^{st} slot, the second TCI state starts to be used after the 9^{th} symbol in the 1^{st} slot, i.e., at the earliest at the 10^{th} symbol. If the PUCCH or PUSCH corresponding to the second HARQ ACK feedback is located at the 12^{th} symbol in the 1^{st} slot, the second TCI state starts to be used after the 5^{th} symbol in the 2^{nd} slot, i.e., at the earliest at the 6^{th} symbol.

In addition, the application time may be located after a last symbol occupied by the PUCCH or after a first symbol occupied by the PUCCH. The application time may be located after a last symbol occupied by the PUSCH or after a first symbol occupied by the PUSCH. When the PUCCH includes a repeated transmission, the last symbol occupied by the PUCCH is the last symbol occupied by the last repeated unit in terms of time. When the PUSCH includes a repeated transmission, the last symbol occupied by the PUSCH is the last symbol occupied by the last repeated unit in terms of time.

Optionally, the first indication information may be carried in the first DCI, i.e., the first indication information and the second indication information are carried in the same DCI. The application time of the first TCI may be found in the detailed description of any embodiments of the disclosure, and will not be repeated herein. In addition, the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein.

It should be noted that, after receiving the second HARQ ACK, the network device may determine the application time of the second TCI state based on the PUCCH or the PUSCH corresponding to the second HARQ ACK, and the fifth designated number, and then use the second TCI state. This ensures that the terminal and the network device have a consistent understanding of the application time of the second TCI state.

In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is carried in the first DCI, it is determined that the application time is located after a third designated number of symbols following the PUCCH or the PUSCH corresponding to the second HARQ ACK feedback, in which the second HARQ ACK feedback is for the first DCI or for the PDSCH scheduled by the first DCI. This may ensure that the terminal and the network device have a consistent understanding of the application time of the second TCI state, thus ensuring that the network device and the terminal use the same TCI state at the same moment, which improves the performance of the transmission based on the TCI state.

Referring to FIG. 6, it is a flow chart illustrating a method for determining application time of a TCI state according to an embodiment of the disclosure. The method is performed by a terminal. As shown in FIG. 6, the method may include, but is not limited to, the following steps 601 to 603.

At step 601, first indication information is received, in which the first indication information indicates at least one first TCI state and/or at least one pair of first TCI states.

At step 602, second indication information is received, in which the second indication information indicates a second TCI state used by transmission of a designated channel and/or a designated signal, and the second TCI state is a part or all of the first TCI states.

In the disclosure, the specific implementation process of step 601 to step 602 may be found in the detailed description of any embodiments of the disclosure, and will not be repeated herein.

At step 603, in response to the second indication information being carried in the first DCI, it is determined that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

In the disclosure, when the first DCI including the second indication information is UL DCI, after receiving the first DCI, the terminal may determine that the application time is located after the fourth designated number of symbols following the last symbol of the PUCCH or the PUSCH corresponding to the confirmation information. The confirmation information may be the PUSCH scheduled by the first DCI, or the HARQ ACK for the first DCI. The third designated number may be pre-configured, or agreed upon by the protocol, or indicated by the network device. This is not limited in the disclosure.

In addition, the application time may be located after a last symbol occupied by the PUCCH or after a first symbol occupied by the PUCCH. The application time may be located after a last symbol occupied by the PUSCH or after a first symbol occupied by the PUSCH. When the PUCCH includes a repeated transmission, the last symbol occupied by the PUCCH is the last symbol occupied by the last repeated unit in terms of time. When the PUSCH includes a repeated transmission, the last symbol occupied by the PUSCH is the last symbol occupied by the last repeated unit in terms of time.

Optionally, the first indication information may be carried in the first DCI, i.e., the first indication information and the second indication information are carried in the same DCI. The application time of the first TCI may be found in the detailed description of any embodiments of the disclosure, and will not be repeated herein. In addition, the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein.

It should be noted that, after receiving the confirmation information, the network device may determine the application time of the second TCI state based on the last symbol of the PUCCH or the PUSCH corresponding to the confirmation information, and the fourth designated number, and then use the second TCI state. This ensures that the terminal and the network device have a consistent understanding of the application time of the second TCI state.

In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is carried in the first DCI, it is determined that the application time is located after the fourth designated number of symbols following the last symbol of the PUCCH or the PUSCH corresponding to the confirmation information. This may ensure that the terminal and the network device have a consistent understanding of the application time of the second TCI state, thus ensuring that the network device and the terminal use the same TCI state at the same moment, which improves the performance of the transmission based on the TCI state.

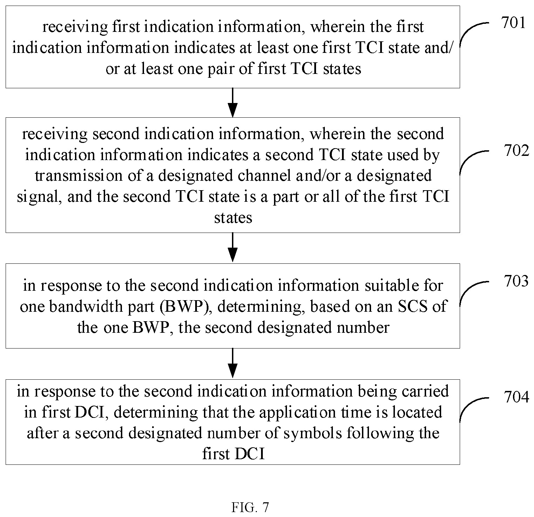

Referring to FIG. 7, it is a flow chart illustrating a method for determining application time of a TCI state according to an embodiment of the disclosure. The method is performed by a terminal. As shown in FIG. 7, the method may include, but is not limited to, the following steps 701 to 704.

At step 701, first indication information is received, in which the first indication information indicates at least one first TCI state and/or at least one pair of first TCI states.

At step 702, second indication information is received, in which the second indication information indicates a second TCI state used by transmission of a designated channel and/or a designated signal, and the second TCI state is a part or all of the first TCI states.

In the disclosure, the specific implementation process of step 701 to step 702 may be found in the detailed description of any embodiments of the disclosure, and will not be repeated herein.

At step 703, in response to the second indication information suitable for one BWP, the second designated number is determined based on an SCS of the one BWP.

In the disclosure, when the second indication information is suitable for one BWP, the terminal and the network device may determine the second designated number based on the SCS of the one BWP. For example, the second designated number may be determined based on a number A corresponding to a corresponding value µ of the SCS of the BWP. For example, it is determined that the second designated number is the number A; or, the second designated number is the number A plus a first offset value, etc. This is not limited in the disclosure.

Alternatively, when the second indication information is suitable for a plurality of BWPs, the second designated number may be determined based on a smallest SCS among SCSs corresponding to the plurality of BWPs.

Alternatively, when the second indication information is suitable for a plurality of CCs, the second designated number may be determined based on a smallest SCS among SCSs corresponding to BWPs on each of the plurality of CCs.

At step 704, in response to the second indication information being carried in first DCI, it is determined that the application time is located after a second designated number of symbols following the first DCI.

In the disclosure, the specific implementation process of step 704 may be found in the detailed description of any embodiments of the disclosure, and will not be repeated herein.

In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is suitable for one BWP, the second designated number may be determined based on the SCS of the one BWP. When the second indication information is carried in the first DCI, it is determined that the application time is located after the second designated number of symbols following the first DCI. This may ensure that the terminal and the network device have a consistent understanding of the application time of the second TCI state, thus ensuring that the network device and the terminal use the same TCI state at the same moment, which improves the performance of the transmission based on the TCI state.

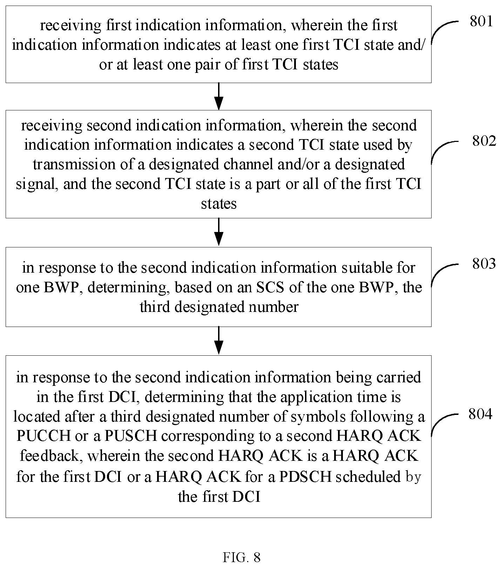

Referring to FIG. 8, it is a flow chart illustrating a method for determining application time of a TCI state according to an embodiment of the disclosure. The method is performed by a terminal. As shown in FIG. 8, the method may include, but is not limited to, the following steps 801 to 804.

At step 801, first indication information is received, in which the first indication information indicates at least one first TCI state and/or at least one pair of first TCI states.

At step 802, second indication information is received, in which the second indication information indicates a second TCI state used by transmission of a designated channel and/or a designated signal, and the second TCI state is a part or all of the first TCI states.

In the disclosure, the specific implementation process of step 801 to step 802 may be found in the detailed description of any embodiments of the disclosure, and will not be repeated herein.

At step 803, in response to the second indication information suitable for one BWP, the third designated number is determined based on an SCS of the one BWP.

In the disclosure, when the second indication information is suitable for one BWP, the terminal and the network device may determine the third designated number based on the SCS of the one BWP. For example, the third designated number may be determined based on a number A corresponding to a corresponding value µ of the SCS of the BWP. For example, it is determined that the third designated number is the number A; or, the third designated number is the number A plus a second offset value, etc. This is not limited in the disclosure.

Alternatively, when the second indication information is suitable for a plurality of BWPs, the third designated number may be determined based on a smallest SCS among SCSs corresponding to the plurality of BWPs.

Alternatively, when the second indication information is suitable for a plurality of CCs, the third designated number may be determined based on a smallest SCS among SCSs corresponding to BWPs on each of the plurality of CCs.

At step 804, in response to the second indication information being carried in the first DCI, it is determined that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI.

In the disclosure, the specific implementation process of step 804 may be found in the detailed description of any embodiments of the disclosure, and will not be repeated herein.

In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is suitable for one BWP, the third designated number is determined based on the SCS of the one BWP. When the second indication information is carried in the first DCI, it is determined that the application time is located after the third designated number of symbols following the PUCCH or the PUSCH corresponding to the second HARQ ACK feedback, in which the second HARQ ACK feedback is for the first DCI or for the PDSCH scheduled by the first DCI. This may ensure that the terminal and the network device have a consistent understanding of the application time of the second TCI state, thus ensuring that the network device and the terminal use the same TCI state at the same moment, which improves the performance of the transmission based on the TCI state.

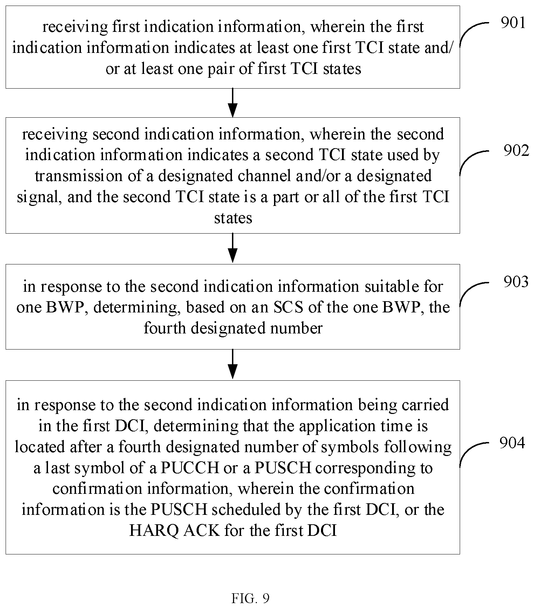

Referring to FIG. 9, it is a flow chart illustrating a method for determining application time of a TCI state according to an embodiment of the disclosure. The method is performed by a terminal. As shown in FIG. 9, the method may include, but is not limited to, the following steps 901 to 904.

At step 901, first indication information is received, in which the first indication information indicates at least one first TCI state and/or at least one pair of first TCI states.

At step 902, second indication information is received, in which the second indication information indicates a second TCI state used by transmission of a designated channel and/or a designated signal, and the second TCI state is a part or all of the first TCI states.

In the disclosure, the specific implementation process of step 901 to step 902 may be found in the detailed description of any embodiments of the disclosure, and will not be repeated herein.

At step 903, in response to the second indication information suitable for one BWP, the fourth designated number is determined based on an SCS of the one BWP.

In the disclosure, when the second indication information is suitable for one BWP, the terminal and the network device may determine the fourth designated number based on the SCS of the one BWP. For example, the fourth designated number may be determined based on a number A corresponding to a corresponding value µ of the SCS of the BWP. For example, it is determined that the fourth designated number is the number A; or, the fourth designated number is the number A plus a third offset value, etc. This is not limited in the disclosure.

Alternatively, when the second indication information is suitable for a plurality of BWPs, the fourth designated number may be determined based on a smallest SCS among SCSs corresponding to the plurality of BWPs.

Alternatively, when the second indication information is suitable for a plurality of CCs, the fourth designated number may be determined based on a smallest SCS among SCSs corresponding to BWPs on each of the plurality of CCs.

At step 904, in response to the second indication information being carried in the first DCI, it is determined that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

In the disclosure, the specific implementation process of step 904 may be found in the detailed description of any embodiments of the disclosure, and will not be repeated herein.

In the disclosure, after receiving the first indication information that indicates the at least one first TCI state and/or at least one pair of first TCI states, the terminal may receive the second indication information that indicates the second TCI state used by transmission of the designated channel and/or the designated signal, and when the second indication information is suitable for one BWP, the fourth designated number may be determined based on the SCS of the one BWP. When the second indication information is carried in the first DCI, it is determined that the application time is located after the fourth designated number of symbols following the last symbol of the PUCCH or the PUSCH corresponding to the confirmation information. This may ensure that the terminal and the network device have a consistent understanding of the application time of the second TCI state, thus ensuring that the network device and the terminal use the same TCI state at the same moment, which improves the performance of the transmission based on the TCI state.

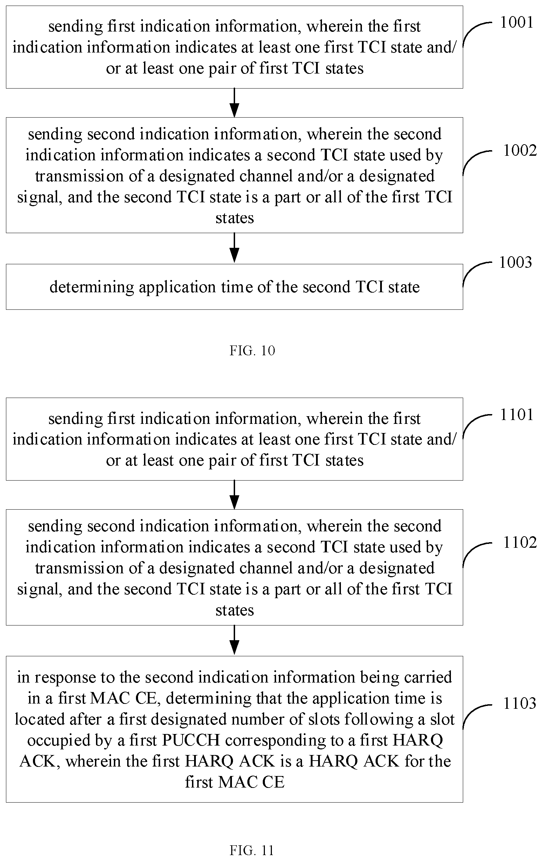

Referring to FIG. 10, it is a flow chart illustrating a method for determining application time of a TCI state according to an embodiment of the disclosure. The method is performed by a network device. As shown in FIG. 10, the method may include, but is not limited to, the following steps 1001 to 1003.

At step 1001, first indication information is sent, in which the first indication information indicates at least one first TCI state and/or at least one pair of first TCI states.

The one TCI state may be a joint TCI state, a DL TCI state, or a UL TCI state. The pair of TCI states may be a DL TCI state and a UL TCI state.

At step 1002, second indication information is sent, in which the second indication information indicates a second TCI state used by transmission of a designated channel and/or a designated signal, and the second TCI state is a part or all of the first TCI states.

The designated channel may include at least one of: a PDCCH, a PDSCH, a PUCCH, or a PUSCH. The designated signal may be a CSI-RS, SRS, a PRS, a TRS, and etc. This is not limited in the disclosure.

In the disclosure, the part or all of the first TCI states may be used by transmission of each designated channel and/or each designated signal, and thus the network device may indicate the second TCI state used by transmission of a designated channel and/or a designated signal by sending the second indication information to the terminal. For example, if the first TCI states includes two TCI states, the second indication information indicates that the second TCI state is the first one of the two TCI states; or the second indication information indicates that the second TCI state is the second one of the two TCI states; or the second indication information indicates that the second TCI states are the two TCI states of the first TCI states.

Optionally, for the PDCCH, the network device may send at least one piece of second indication information to the terminal to indicate a TCI state used by PDCCH transmission corresponding to a CORESET ID; or a TCI state used by PDCCH transmission corresponding to a CORESET pool index; or a TCI state used by PDCCH transmission corresponding to an SS set group ID; or a TCI state used by PDCCH transmission corresponding to a CORESET group ID.

Optionally, for the PUSCH, the network device may send at least one piece of second indication information to the terminal to indicate a TCI state used by PUSCH transmission with dynamic scheduling; or a TCI state used by PUSCH transmission with a configured grant type 1; or a TCI state used by PUSCH transmission with a configured grant type 2.

At step 1003, application time of the second TCI state is determined.

In the disclosure, after sending the second indication information, the network device may determine the application time of the second TCI state based on the same designated rule or the same protocol agreement as the terminal, thus ensuring that the terminal and the network device have a consistent understanding of the application time of the second TCI state.

For example, it is determined that the application time of the second TCI state is located after a designated number of slots following a slot occupied by a PUCCH corresponding to a HARQ ACK. The HARQ ACK may be a HARQ ACK that includes a second TCI state signaling.

In the disclosure, after sending the first indication information that indicates the at least one first TCI state and/or at least one pair of first TCI states to the terminal, the network device may send the second indication information that indicates the second TCI state used by transmission of the designated channel and/or the designated signal to the terminal, and may determine the application time of the second TCI state. This ensures that the terminal and the network device have a consistent understanding of the application time of the second TCI state, thus ensuring that the network device and the terminal use the same TCI state at the same moment, which improves the performance of the transmission based on the TCI state.

Referring to FIG. 11, it is a flow chart illustrating a method for determining application time of a TCI state according to an embodiment of the disclosure. The method is performed by a network device. As shown in FIG. 11, the method may include, but is not limited to, the following steps 1101 to 1103.

At step 1101, first indication information is sent, in which the first indication information indicates at least one first TCI state and/or at least one pair of first TCI states.

At step 1102, second indication information is sent, in which the second indication information indicates a second TCI state used by transmission of a designated channel and/or a designated signal, and the second TCI state is a part or all of the first TCI states.

In the disclosure, the specific implementation process of step 1101 to step 1102 may be found in the detailed description of any embodiments of the disclosure, and will not be repeated herein.

At step 1103, in response to the second indication information being carried in a first MAC CE, it is determined that the application time is located after a first designated number of slots following a slot occupied by a first PUCCH corresponding to a first HARQ ACK, in which the first HARQ ACK is a HARQ ACK for the first MAC CE.

Optionally, the network device may configure the second indication information in a MAC CE. Thus, when receiving the MAC CE, the terminal may determine the second TCI state in the second indication information.

When the second indication information is carried in the first MAC CE, the terminal, after receiving the first MAC CE, may return to the network device a first HARQ ACK for the first MAC CE. Thus, the network device and the terminal may determine the application time of the second TCI state as being located after the first designated number of slots following the slot occupied by the first PUCCH corresponding to the first HARQ ACK. This ensures that the terminal and the network device have a consistent understanding of the application time of the second TCI state, i.e., ensuring that both the terminal and the network device may determine the application time of the second TCI state based on the slot occupied by the first PUCCH and the first designated number of slots, thus ensuring that the network device and the terminal use the same TCI state at the same moment, which improves the performance of the transmission based on the TCI state. In addition, the first designated number may be pre-configured, or agreed upon by the protocol, or indicated by the network device. This is not limited in the disclosure.

For example, if the first designated number is 3, the slot occupied by the first PUCCH is the first slot, and the application time of the second TCI state is a slot starting from the 5^{th} slot.

In addition, when it is preset that the second TCI state starts to be used after a preset duration following the slot occupied by the first PUCCH, and since a number of slots included in one subframe has a correlation with a SCS, the first designated number may be determined based on the SCS of the first PUCCH. The correspondence between the number of slots included in one subframe, i.e., 1 ms, and the SCS is shown in the above Table 1.

For example, when it is preset that the second TCI state starts to be used after 3ms following the slot occupied by the first PUCCH and the corresponding value *µ* of the SCS is 1, it may be determined that the number of slots included in each subframe at this time is 2 based on Table 1. Since the length of one subframe is 1 ms, it is then determined that the 3 ms includes 3 subframes, and the 3 ms includes 6 slots. Thus, it may be determined that the second TCI state may start to be used after the 6^{th} slot following the slot occupied by the first PUCCH, that is, the second TCI state may be used at the earliest at the 7^{th} slot following the slot occupied by the first PUCCH.

Optionally, the first MAC CE may further carry the first indication information, i.e., the first indication information and the second indication information are carried in the same MAC CE. The application time of the first TCI state may be located after a preset designated number of slots following the slot occupied by the first PUCCH corresponding to the first HARQ ACK. In addition, the preset designated number may be the same as or different from the first designated number, i.e., the application time of the first TCI state is the same as or different from the application time of the second TCI state. This is not limited in the disclosure.

Optionally, the first indication information and the second indication information may be configured in different MAC CEs. The first indication information may be configured in a second MAC CE, to indicate the first TCI state using the second MAC CE.

Optionally, one codepoint in the TCI field in the DCI may correspond to a plurality of TCI states; or one codepoint in the TCI field in the DCI may correspond to a plurality of pairs of TCI states; or one codepoint in the TCI field in the DCI may correspond to one TCI state and one pair of TCI states; or one codepoint in the TCI field in the DCI may correspond to the plurality of TCI states and the plurality of pairs of TCI states; or one codepoint in the TCI field in the DCI may correspond to one TCI state and the plurality of pairs of TCI states; or one codepoint in the TCI field in the DCI may correspond to the plurality of TCI states and one pair of TCI states, and etc. Thus, the first indication information may be carried in a second MAC CE and first DCI. The second MAC CE is configured to activate at least one first TCI state and/or at least one pair of first TCI states corresponding to each of the plurality of codepoints in the TCI field in the first DCI. The first DCI is configured to indicate one codepoint of the plurality of codepoints.

That is, the network device may first activate the at least one first TCI state and/or at least one pair of first TCI states corresponding to the plurality of codepoints via the second MAC CE, and then indicate one codepoint of the plurality of codepoints via the DCI. Thus, the terminal may determine the first TCI state based on the at least one first TCI state and/or at least one pair of first TCI states corresponding to the indicated one codepoint. Further, the terminal receives the second indication information. The second indication information indicates a second TCI state. The second TCI state is a part or all of the first TCI states. Thus, the terminal determines the second TCI state corresponding to the designated channel or the designated signal based on the first indication information and the second indication information, i.e., clearly specifies which designated channel or designated signal is quasi-co-located with the reference signal indicated by which TCI state or which pair of TCI states.

It should be noted that the first indication information and the second indication information are independently indicated by the network device.

In an embodiment, if at the current moment, the network device indicates a new first TCI state and the second TCI state remains unchanged, the first TCI state corresponding to the next moment may be determined based on the next moment and the application time of the first TCI state. For example, at a first time, the first TCI states are TCI#1 and TCI#2, and the second TCI state is the first one of the first TCI states, i.e., TCI#1. At a second time, the network device sends the first indication information indicating that the first TCI states are TCI#3 and TCI#4, and does not send the second indication information. Then at a third time, if the third time is before the application time of the first TCI state, the first TCI states still are TCI#1 and TCI#2, and the second TCI state is the first one of the first TCI state, i.e., TCI#1. If the third time is after the application time of the first TCI state, the first TCI states are TCI#3 and TCI#4, and the second TCI state is the first one of the first TCI states, i.e., TCI#3.

In an embodiment, if at the current moment, the network device indicates a new second TCI state and the first TCI state remains unchanged, the second TCI state corresponding to the next moment may be determined based on the next moment and the application time of the second TCI state. For example, at a first time, the first TCI states are TCI#1 and TCI#2, and the second TCI state is the first one of the first TCI states, i.e., TCI#1. At a second time, the network device does not send the first indication information, but sends the second indication information indicating that the second TCI state is the second one of the first TCI states. Then at a third time, if the third time is before the application time of the second TCI state, the second TCI state is the first one of the first TCI states, i.e., TCI#1. If the third time is after the application time of the second TCI state, the second TCI state is the second one of the first TCI states, i.e., TCI#2.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. For example, at a first time, the first TCI states are TCI#1 and TCI#2, and the second TCI state is the first one of the first TCI states, i.e., TCI#1. At a second time, the network device sends the first indication information indicating that the first TCI states are TCI#3 and TCI#4, and sends the second indication information indicating that the second TCI state is the second one of the first TCI states. Then at a third time, if the third time is before the application time of the first TCI state and the application time of the second TCI state, then the first TCI states are TCI#1 and TCI#2, and the second TCI state is the first one of the first TCI states, i.e., TCI#1. If the third time is after the application time of the first TCI state and before the application time of the second TCI state, then the first TCI states are TCI#3 and TCI#4, and the second TCI state is the first one of the first TCI states, i.e., TCI#3. If the third time is before the application time of the first TCI state and after the application time of the second TCI state, then the first TCI states are TCI#1 and TCI#2, and the second TCI state is the second one of the first TCI states, i.e., TCI#2. If the third time is after the application time of the first TCI state and after the application time of the second TCI state, then the first TCI states are TCI#3 and TCI#4, and the second TCI state is the second one of the first TCI states, i.e., TCI#4.

In the disclosure, after sending the first indication information that indicates the at least one first TCI state and/or at least one pair of first TCI states to the terminal, the network device sends the second indication information that indicates the second TCI state used by transmission of the designated channel and/or the designated signal, and in the case that the second indication information is carried in the first MAC CE, it is determined that the application time is located after the first designated number of slots following the slot occupied by the first PUCCH corresponding to the first HARQ ACK. This may ensure that the terminal and the network device have a consistent understanding of the application time of the second TCI state, thus ensuring that the network device and the terminal use the same TCI state at the same moment, which improves the performance of the transmission based on the TCI state.

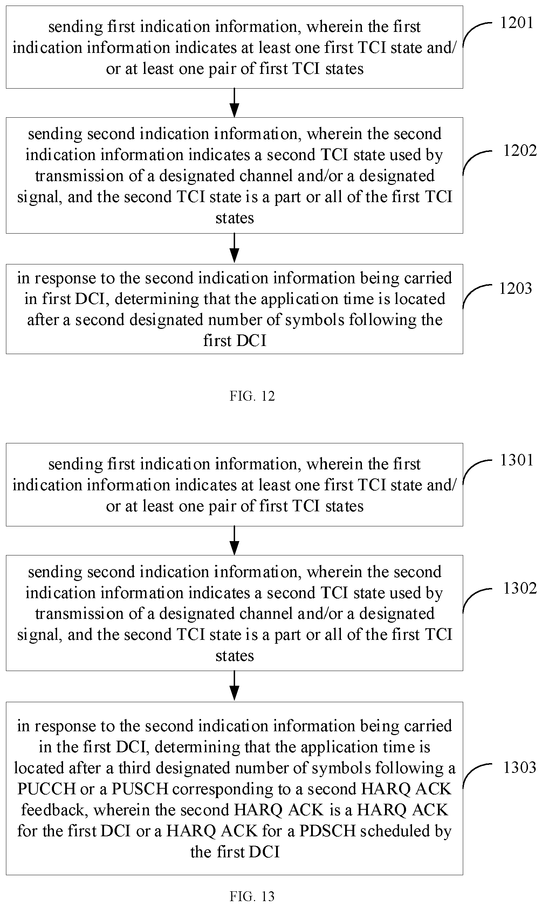

Referring to FIG. 12, it is a flow chart illustrating a method for determining application time of a TCI state according to an embodiment of the disclosure. The method is performed by a network device. As shown in FIG. 12, the method may include, but is not limited to, the following steps 1201 to 1203.

At step 1201, first indication information is sent, in which the first indication information indicates at least one first TCI state and/or at least one pair of first TCI states.

At step 1202, second indication information is sent, in which the second indication information indicates a second TCI state used by transmission of a designated channel and/or a designated signal, and the second TCI state is a part or all of the first TCI states.

In the disclosure, the specific implementation process of step 1201 to step 1202 may be found in the detailed description of any embodiments of the disclosure, and will not be repeated herein.

At step 1203, in response to the second indication information being carried in first DCI, it is determined that the application time is located after a second designated number of symbols following the first DCI.

In the disclosure, the network device may configure the second indication information in the first DCI which is sent to the terminal. The terminal and the network device may determine the application time of the second TCI state as being located after the second designated number of symbols following the first DCI. This ensures that the terminal and the network device have a consistent understanding of the application time of the second TCI state, thus ensuring that the network device and the terminal use the same TCI state at the same moment, which improves the performance of the transmission based on the TCI state.

The application time may be located after a first symbol of the first DCI, or after a last symbol of the first DCI. When the first DCI includes a plurality of PDCCH candidates, the last symbol of the first DCI is the last symbol occupied by a PDCCH candidate with a later end time. In addition, the second designated number may be pre-configured, or agreed upon by the protocol, or indicated by the network device. This is not limited in the disclosure.

Optionally, the first indication information may be carried in the first DCI, i.e., the first indication information and the second indication information are carried in the same DCI. The application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI. In addition, the fifth designated number and the second designated number may be the same or different, i.e., the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein.

In the disclosure, after sending the first indication information that indicates the at least one first TCI state and/or at least one pair of first TCI states to the terminal, the network device sends the second indication information that indicates the second TCI state used by transmission of the designated channel and/or the designated signal, and when that the second indication information is carried in the first DCI, it is determined that the application time is located after a second designated number of symbols following the first DCI. This may ensure that the terminal and the network device have a consistent understanding of the application time of the second TCI state, thus ensuring that the network device and the terminal use the same TCI state at the same moment, which improves the performance of the transmission based on the TCI state.

Referring to FIG. 13, it is a flow chart illustrating a method for determining application time of a TCI state according to an embodiment of the disclosure. The method is performed by a network device. As shown in FIG. 13, the method may include, but is not limited to, the following steps 1301 to 1303.

At step 1301, first indication information is sent, in which the first indication information indicates at least one first TCI state and/or at least one pair of first TCI states.

At step 1302, second indication information is sent, in which the second indication information indicates a second TCI state used by transmission of a designated channel and/or a designated signal, and the second TCI state is a part or all of the first TCI states.

In the disclosure, the specific implementation process of step 1301 to step 1302 may be found in the detailed description of any embodiments of the disclosure, and will not be repeated herein.

At step 1303, in response to the second indication information being carried in the first DCI, it is determined that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI.

In the disclosure, when the first DCI including the second indication information is DL DCI, after receiving the first DCI, the terminal may return the second HARQ ACK to the network device, in which the second HARQ ACK is the HARQ ACK for the first DCI or the HARQ ACK for the PDSCH scheduled by the first DCI. Accordingly, the terminal and the network device may determine a slot located after the third designated number of symbols following the PUCCH or the PUSCH corresponding to the second HARQ ACK feedback as the application time of the second TCI state. The second HARQ ACK is the HARQ ACK for the first DCI or the HARQ ACK for the PDSCH scheduled by the first DCI. The third designated number may be pre-configured, or agreed upon by the protocol, or indicated by the network device. This is not limited in the disclosure.

For example, in the case that a slot includes 14 symbols and the third designated number is 7, and if the PUCCH or the PUSCH corresponding to the second HARQ ACK feedback is located at the 2^{nd} symbol in the 1^{st} slot, the second TCI state starts to be used after the 9^{th} symbol in the 1^{st} slot, i.e., at the earliest at the 10^{th} symbol. If the PUCCH or PUSCH corresponding to the second HARQ ACK feedback is located at the 12^{th} symbol in the 1^{st} slot, the second TCI state starts to be used after the 5^{th} symbol in the 2^{nd} slot, i.e., at the earliest at the 6^{th} symbol.

In addition, the application time may be located after a last symbol occupied by the PUCCH or after a first symbol occupied by the PUCCH. The application time may be located after a last symbol occupied by the PUSCH or after a first symbol occupied by the PUSCH. When the PUCCH includes a repeated transmission, the last symbol occupied by the PUCCH is the last symbol occupied by the last repeated unit in terms of time. When the PUSCH includes a repeated transmission, the last symbol occupied by the PUSCH is the last symbol occupied by the last repeated unit in terms of time.

Optionally, the first indication information may be carried in the first DCI, i.e., the first indication information and the second indication information are carried in the same DCI. The application time of the first TCI may be found in the detailed description of any embodiments of the disclosure, and will not be repeated herein. In addition, the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state and/or the second TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein.

It should be noted that, after sending the second HARQ ACK, the terminal may determine the application time of the second TCI state based on the PUCCH or the PUSCH corresponding to the second HARQ ACK, and the fifth designated number, and then use the second TCI state. This ensures that the terminal and the network device have a consistent understanding of the application time of the second TCI state.

In the disclosure, after sending the first indication information that indicates the at least one first TCI state and/or at least one pair of first TCI states to the terminal, the network device sends the second indication information that indicates the second TCI state used by transmission of the designated channel and/or the designated signal to the terminal, and when the second indication information is carried in the first DCI, it is determined that the application time is located after a third designated number of symbols following the PUCCH or the PUSCH corresponding to the second HARQ ACK feedback, in which the second HARQ ACK feedback is for the first DCI or for the PDSCH scheduled by the first DCI. This may ensure that the terminal and the network device have a consistent understanding of the application time of the second TCI state, thus ensuring that the network device and the terminal use the same TCI state at the same moment, which improves the performance of the transmission based on the TCI state.

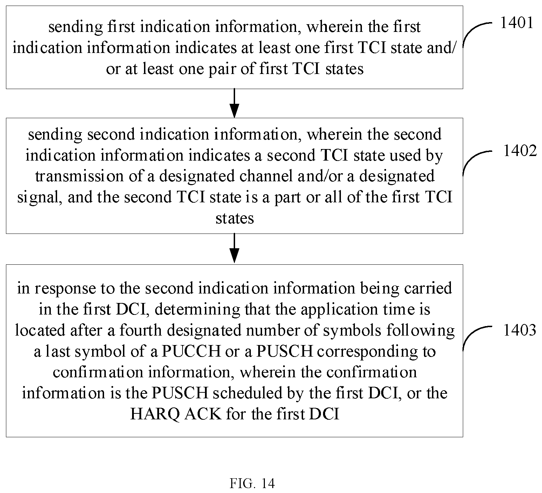

Referring to FIG. 14, it is a flow chart illustrating a method for determining application time of a TCI state according to an embodiment of the disclosure. The method is performed by a network device. As shown in FIG. 14, the method may include, but is not limited to, the following steps 1401 to 1403.

At step 1401, first indication information is sent, in which the first indication information indicates at least one first TCI state and/or at least one pair of first TCI states.

At step 1402, second indication information is sent, in which the second indication information indicates a second TCI state used by transmission of a designated channel and/or a designated signal, and the second TCI state is a part or all of the first TCI states.

In the disclosure, the specific implementation process of step 1401 to step 1402 may be found in the detailed description of any embodiments of the disclosure, and will not be repeated herein.

At step 1403, in response to the second indication information being carried in the first DCI, it is determined that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

In the disclosure, when the first DCI including the second indication information is UL DCI, the network device may determine that the application time is located after the fourth designated number of symbols following the last symbol of the PUCCH or the PUSCH corresponding to the confirmation information. The confirmation information may be the PUSCH scheduled by the first DCI, or the HARQ ACK for the first DCI. The third designated number may be pre-configured, or agreed upon by the protocol, or indicated by the network device. This is not limited in the disclosure.

In addition, the application time may be located after a last symbol occupied by the PUCCH or after a first symbol occupied by the PUCCH. The application time may be located after a last symbol occupied by the PUSCH or after a first symbol occupied by the PUSCH. When the PUCCH includes a repeated transmission, the last symbol occupied by the PUCCH is the last symbol occupied by the last repeated unit in terms of time. When the PUSCH includes a repeated transmission, the last symbol occupied by the PUSCH is the last symbol occupied by the last repeated unit in terms of time.

Optionally, the first indication information may be carried in the first DCI, i.e., the first indication information and the second indication information are carried in the same DCI. The application time of the first TCI may be found in the detailed description of any embodiments of the disclosure, and will not be repeated herein. In addition, the application time of the first TCI state and the application time of the second TCI state may be the same or different. This is not limited in the disclosure.

It should be noted that the first indication information and the second indication information are independently indicated by the network device.

In an embodiment, if at the current moment, the network device indicates a new first TCI state and the second TCI state remains unchanged, the first TCI state and/or the second TCI state corresponding to the next moment may be determined based on the next moment and the application time of the first TCI state. The detailed description of the above process may be found in the detailed description of any embodiments of the disclosure, and will not be repeated herein.

In an embodiment, if at the current moment, the network device indicates a new second TCI state and the first TCI state remains unchanged, the second TCI state corresponding to the next moment may be determined based on the next moment and the application time of the second TCI state. The detailed description of the above process may be found in the detailed description of any embodiments of the disclosure, and will not be repeated herein.

In an embodiment, if at the current moment, the network device indicates a new first TCI state and a new second TCI state, the second TCI state and the first TCI state corresponding to the next moment may be determined based on the next moment, the application time of the first TCI state and the application time of the second TCI state. The detailed description of the above process may be found in the detailed description of any embodiments of the disclosure, and will not be repeated herein.

It should be noted that, after sending the confirmation information, the terminal may determine the application time of the second TCI state based on the last symbol of the PUCCH or the PUSCH corresponding to the confirmation information, and the fourth designated number, and then use the second TCI state. This ensures that the terminal and the network device have a consistent understanding of the application time of the second TCI state.

In the disclosure, after sending the first indication information that indicates the at least one first TCI state and/or at least one pair of first TCI states to the terminal, the network device sends the second indication information that indicates the second TCI state used by transmission of the designated channel and/or the designated signal to the terminal, and when the second indication information is carried in the first DCI, it is determined that the application time is located after the fourth designated number of symbols following the last symbol of the PUCCH or the PUSCH corresponding to the confirmation information. This may ensure that the terminal and the network device have a consistent understanding of the application time of the second TCI state, thus ensuring that the network device and the terminal use the same TCI state at the same moment, which improves the performance of the transmission based on the TCI state.

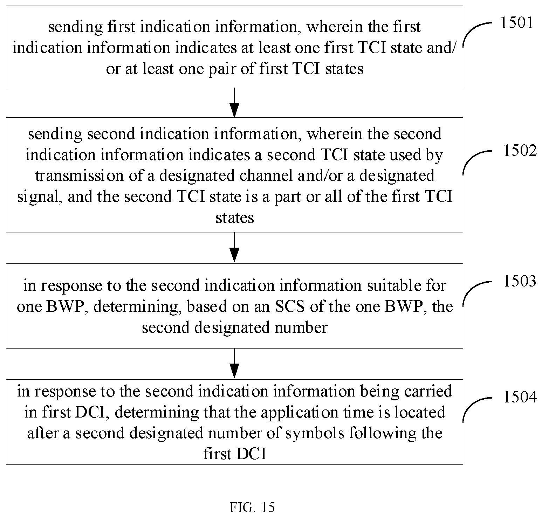

Referring to FIG. 15, it is a flow chart illustrating a method for determining application time of a TCI state according to an embodiment of the disclosure. The method is performed by a network device. As shown in FIG. 15, the method may include, but is not limited to, the following steps 1501 to 1504.

At step 1501, first indication information is sent, in which the first indication information indicates at least one first TCI state and/or at least one pair of first TCI states.

At step 1502, second indication information is sent, in which the second indication information indicates a second TCI state used by transmission of a designated channel and/or a designated signal, and the second TCI state is a part or all of the first TCI states.

In the disclosure, the specific implementation process of step 1501 to step 1502 may be found in the detailed description of any embodiments of the disclosure, and will not be repeated herein.

At step 1503, in response to the second indication information suitable for one BWP, the second designated number is determined based on an SCS of the one BWP.

In the disclosure, when the second indication information is suitable for one BWP, the terminal and the network device may determine the second designated number based on the SCS of the one BWP. For example, the second designated number may be determined based on a number A corresponding to a corresponding value µ of the SCS of the BWP. For example, it is determined that the second designated number is the number A; or, the second designated number is the number A plus a first offset value, etc. This is not limited in the disclosure.

Alternatively, when the second indication information is suitable for a plurality of BWPs, the second designated number may be determined based on a smallest SCS among SCSs corresponding to the plurality of BWPs.

Alternatively, when the second indication information is suitable for a plurality of CCs, the second designated number may be determined based on a smallest SCS among SCSs corresponding to BWPs on each of the plurality of CCs.

At step 1504, in response to the second indication information being carried in first DCI, it is determined that the application time is located after a second designated number of symbols following the first DCI.

In the disclosure, the specific implementation process of step 1504 may be found in the detailed description of any embodiments of the disclosure, and will not be repeated herein.

In the disclosure, after sending the first indication information that indicates the at least one first TCI state and/or at least one pair of first TCI states to the terminal, the network device sends the second indication information that indicates the second TCI state used by transmission of the designated channel and/or the designated signal to the terminal, and when the second indication information is suitable for one BWP, the second designated number may be determined based on the SCS of the one BWP. When the second indication information is carried in the first DCI, it is determined that the application time is located after the second designated number of symbols following the first DCI. This may ensure that the terminal and the network device have a consistent understanding of the application time of the second TCI state, thus ensuring that the network device and the terminal use the same TCI state at the same moment, which improves the performance of the transmission based on the TCI state.

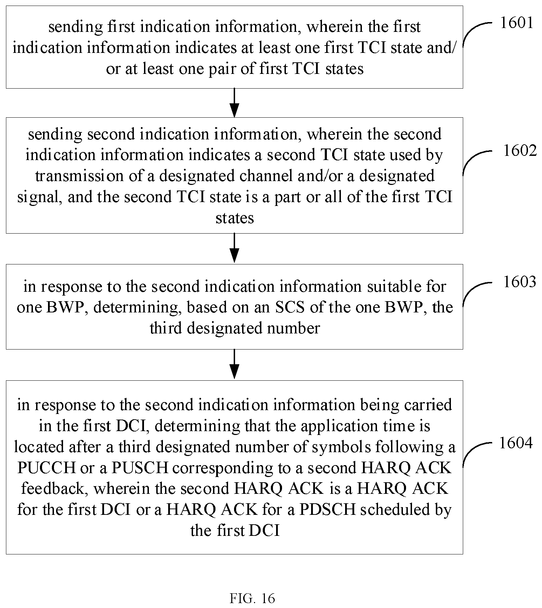

Referring to FIG. 16, it is a flow chart illustrating a method for determining application time of a TCI state according to an embodiment of the disclosure. The method is performed by a network device. As shown in FIG. 16, the method may include, but is not limited to, the following steps 1601 to 1604.

At step 1601, first indication information is sent, in which the first indication information indicates at least one first TCI state and/or at least one pair of first TCI states.

At step 1602, second indication information is sent, in which the second indication information indicates a second TCI state used by transmission of a designated channel and/or a designated signal, and the second TCI state is a part or all of the first TCI states.

In the disclosure, the specific implementation process of step 1601 to step 1602 may be found in the detailed description of any embodiments of the disclosure, and will not be repeated herein.

At step 1603, in response to the second indication information suitable for one BWP, the third designated number is determined based on an SCS of the one BWP.

In the disclosure, when the second indication information is suitable for one BWP, the terminal and the network device may determine the third designated number based on the SCS of the one BWP. For example, the third designated number may be determined based on a number A corresponding to a corresponding value µ of the SCS of the BWP. For example, it is determined that the third designated number is the number A; or, the third designated number is the number A plus a second offset value, etc. This is not limited in the disclosure.

Alternatively, when the second indication information is suitable for a plurality of BWPs, the third designated number may be determined based on a smallest SCS among SCSs corresponding to the plurality of BWPs.

Alternatively, when the second indication information is suitable for a plurality of CCs, the third designated number may be determined based on a smallest SCS among SCSs corresponding to BWPs on each of the plurality of CCs.

At step 1604, in response to the second indication information being carried in the first DCI, it is determined that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI.

In the disclosure, the specific implementation process of step 1604 may be found in the detailed description of any embodiments of the disclosure, and will not be repeated herein.

In the disclosure, after sending the first indication information that indicates the at least one first TCI state and/or at least one pair of first TCI states to the terminal, the network device the second indication information that indicates the second TCI state used by transmission of the designated channel and/or the designated signal to the terminal, and when the second indication information is suitable for one BWP, the third designated number is determined based on the SCS of the one BWP. When the second indication information is carried in the first DCI, it is determined that the application time is located after the third designated number of symbols following the PUCCH or the PUSCH corresponding to the second HARQ ACK feedback, in which the second HARQ ACK feedback is for the first DCI or for the PDSCH scheduled by the first DCI. This may ensure that the terminal and the network device have a consistent understanding of the application time of the second TCI state, thus ensuring that the network device and the terminal use the same TCI state at the same moment, which improves the performance of the transmission based on the TCI state.

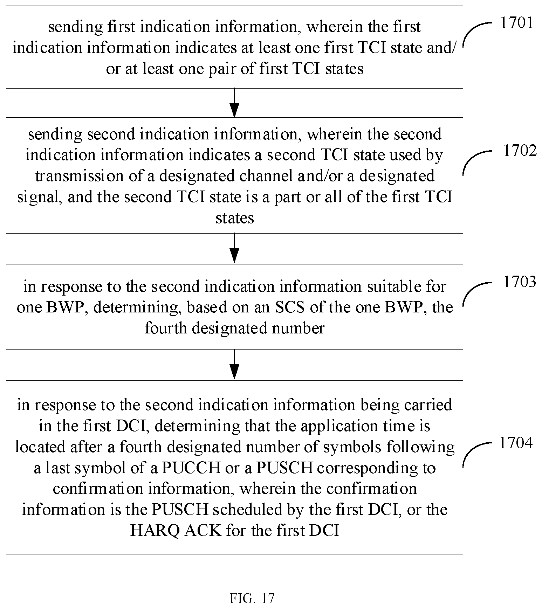

Referring to FIG. 17, it is a flow chart illustrating a method for determining application time of a TCI state according to an embodiment of the disclosure. The method is performed by a network device. As shown in FIG. 17, the method may include, but is not limited to, the following steps 1701 to 1704.

At step 1701, first indication information is sent, in which the first indication information indicates at least one first TCI state and/or at least one pair of first TCI states.

At step 1702, second indication information is sent, in which the second indication information indicates a second TCI state used by transmission of a designated channel and/or a designated signal, and the second TCI state is a part or all of the first TCI states.

In the disclosure, the specific implementation process of step 1701 to step 1702 may be found in the detailed description of any embodiments of the disclosure, and will not be repeated herein.

At step 1703, in response to the second indication information suitable for one BWP, the fourth designated number is determined based on an SCS of the one BWP.

In the disclosure, when the second indication information is suitable for one BWP, the terminal and the network device may determine the fourth designated number based on the SCS of the one BWP. For example, the fourth designated number may be determined based on a number A corresponding to a corresponding value µ of the SCS of the BWP. For example, it is determined that the fourth designated number is the number A; or, the fourth designated number is the number A plus a third offset value, etc. This is not limited in the disclosure.

Alternatively, when the second indication information is suitable for a plurality of BWPs, the fourth designated number may be determined based on a smallest SCS among SCSs corresponding to the plurality of BWPs.

Alternatively, when the second indication information is suitable for a plurality of CCs, the fourth designated number may be determined based on a smallest SCS among SCSs corresponding to BWPs on each of the plurality of CCs.

At step 1704, in response to the second indication information being carried in the first DCI, it is determined that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

In the disclosure, the specific implementation process of step 1704 may be found in the detailed description of any embodiments of the disclosure, and will not be repeated herein.

In the disclosure, after sending the first indication information that indicates the at least one first TCI state and/or at least one pair of first TCI states to the terminal, the network device sends the second indication information that indicates the second TCI state used by transmission of the designated channel and/or the designated signal to the terminal, and when the second indication information is suitable for one BWP, the fourth designated number is determined based on the SCS of the one BWP. When the second indication information is carried in the first DCI, it is determined that the application time is located after the fourth designated number of symbols following the last symbol of the PUCCH or the PUSCH corresponding to the confirmation information. This may ensure that the terminal and the network device have a consistent understanding of the application time of the second TCI state, thus ensuring that the network device and the terminal use the same TCI state at the same moment, which improves the performance of the transmission based on the TCI state.

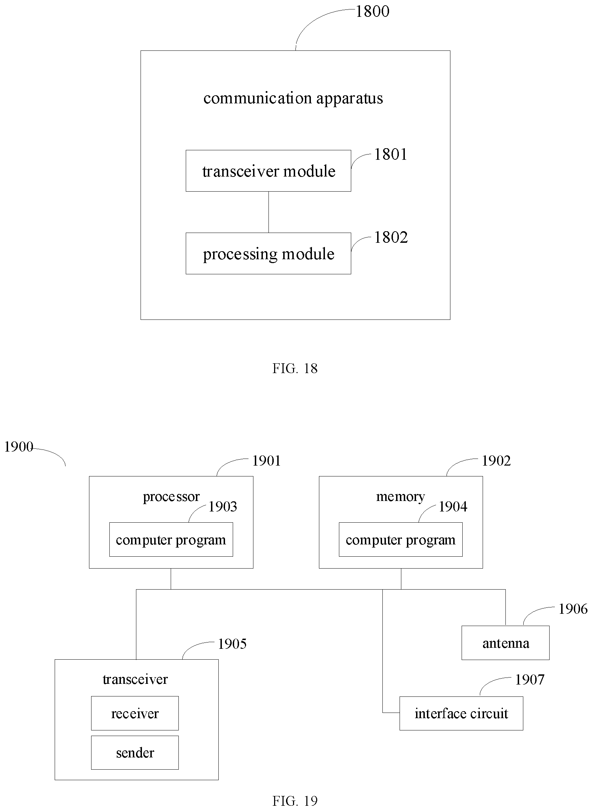

Referring to FIG. 18, it is a structural block diagram illustrating an communication apparatus 1800 according to an embodiment of the disclosure. The communication apparatus 1800 illustrated in FIG. 18 may include a transceiver module 1801 and a processing module 1802. The transceiver module 1801 may include a sending unit and/or a receiving unit. The sending unit is configured to implement a sending function, and the receiving unit is configured to implement a receiving function. The transceiver module 1801 may implement the sending function and/or the receiving function.

It may be understood that the communication apparatus 1800 may be a terminal, an apparatus in the terminal, or an apparatus that may be used in match to the terminal

In the case that the communication apparatus 1800 is on the terminal side, the apparatus includes a transceiver module 1801 and a processing module 1802.

The transceiver module 1801 is configured to receive first indication information, in which the first indication information indicates at least one first TCI state and/or at least one pair of first TCI states, and the transceiver module 1801 is further configured to receive second indication information, in which the second indication information indicates a second TCI state used by transmission of a designated channel and/or a designated signal, and the second TCI state is a part or all of the first TCI states.

The processing module 1802 is configured to determine application time of the second TCI state.

Optionally, the designated channel includes at least one of: a PDCCH, a PDSCH, a PUCCH, or a PUSCH.

Optionally, the second indication information is carried in DCI or a MAC CE.

Optionally, the processing module 1802 is configured to, in response to the second indication information being carried in a first MAC CE, determine that the application time is located after a first designated number of slots following a slot occupied by a first PUCCH corresponding to a first HARQ ACK, in which the first HARQ ACK is a HARQ ACK for the first MAC CE.

Optionally, the first indication information is carried in the first MAC CE, application time of the first TCI state is the same as or different from the application time of the second TCI state.

Optionally, the processing module 1802 is further configured to determine, based on an SCS of the first PUCCH, the first designated number.

Optionally, the processing module 1802 is further configured to, in response to the second indication information being carried in first DCI, determine that the application time is located after a second designated number of symbols following the first DCI; or, in response to the second indication information being carried in the first DCI, determine that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI; or, in response to the second indication information being carried in the first DCI, determine that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

Optionally, the first indication information is carried in the first DCI, application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI, and the fifth designated number is the same as or different from the third designated number.

Optionally, the processing module 1802 is further configured to, in response to the second indication information suitable for one BWP, determine, based on an SCS of the one BWP, at least one of the second designated number, the third designated number, or the fourth designated number; or, in response to the second indication information suitable for a plurality of BWPs, determine, based on a smallest SCS among SCSs corresponding to the plurality of BWPs, at least one of the second designated number, the third designated number or the fourth designated number; or, in response to the second indication information suitable for a plurality of CCs, determine, based on a smallest SCS among SCSs corresponding to BWPs on each of the plurality of CCs, at least one of the second designated number, the third designated number or the fourth designated number.

In the disclosure, after receiving the first indication information that indicates the at least one first TCI state and/or at least one pair of first TCI states, the terminal may receive the second indication information that indicates the second TCI state used by transmission of the designated channel and/or the designated signal, and may determine the application time of the second TCI state. This may ensure that the terminal and the network device have a consistent understanding of the application time of the second TCI state, thus ensuring that the network device and the terminal use the same TCI state at the same moment, which improves the performance of the transmission based on the TCI state.

It should be noted that the above apparatus embodiments are obtained based on the method embodiments, and their detailed descriptions may be found in those of the method embodiments, and will not be repeated herein.

It may be understood that the communication apparatus 1800 may be a network device, an apparatus in the network device, or an apparatus that may be used in match to the network device.

In the case that the communication apparatus 1800 is on the network device side, the communication apparatus includes a transceiver module 1801 and a processing module 1802.

The transceiver module 1801 is configured to send first indication information, in which the first indication information indicates at least one first TCI state and/or at least one pair of first TCI states; and the transceiver module 1801 is further configured to send second indication information, in which the second indication information indicates a second TCI state used by transmission of a designated channel and/or a designated signal, and the second TCI state is a part or all of the first TCI states.

The processing module 1802 is configured to determine application time of the second TCI state.

Optionally, the designated channel includes at least one of: a PDCCH, a PDSCH, a PUCCH, or a PUSCH.

Optionally, the second indication information is carried in DCI or a MAC CE.

Optionally, the processing module 1802 is configured to, in response to the second indication information being carried in a first MAC CE, determine that the application time is located after a first designated number of slots following a slot occupied by a first PUCCH corresponding to a first HARQ ACK, in which the first HARQ ACK is a HARQ ACK for the first MAC CE.

Optionally, the first indication information is carried in the first MAC CE, application time of the first TCI state is the same as or different from the application time of the second TCI state.

Optionally, the processing module 1802 is further configured to determine, based on an SCS of the first PUCCH, the first designated number.

Optionally, the processing module 1802 is further configured to, in response to the second indication information being carried in first DCI, determine that the application time is located after a second designated number of symbols following the first DCI; or, in response to the second indication information being carried in the first DCI, determine that the application time is located after a third designated number of symbols following a PUCCH or a PUSCH corresponding to a second HARQ ACK feedback, in which the second HARQ ACK is a HARQ ACK for the first DCI or a HARQ ACK for a PDSCH scheduled by the first DCI; or, in response to the second indication information being carried in the first DCI, determine that the application time is located after a fourth designated number of symbols following a last symbol of a PUCCH or a PUSCH corresponding to confirmation information, in which the confirmation information is a PUSCH scheduled by the first DCI, or an HARQ ACK for the first DCI.

Optionally, the first indication information is carried in the first DCI, application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI, and the fifth designated number is the same as or different from the third designated number.

Optionally, the processing module 1802 is further configured to, in response to the second indication information suitable for one BWP, determine, based on an SCS of the one BWP, at least one of the second designated number, the third designated number, or the fourth designated number; or, in response to the second indication information suitable for a plurality of BWPs, determine, based on a smallest SCS among SCSs corresponding to the plurality of BWPs, at least one of the second designated number, the third designated number or the fourth designated number; or, in response to the second indication information suitable for a plurality of CCs, determine, based on a smallest SCS among SCSs corresponding to BWPs on each of the plurality of CCs, at least one of the second designated number, the third designated number or the fourth designated number.

In the disclosure, after sending the first indication information that indicates the at least one first TCI state and/or at least one pair of first TCI states to the terminal, the network device may send the second indication information that indicates the second TCI state used by transmission of the designated channel and/or the designated signal to the terminal, and may determine the application time of the second TCI state. This may ensure that the terminal and the network device have a consistent understanding of the application time of the second TCI state, thus ensuring that the network device and the terminal use the same TCI state at the same moment, which improves the performance of the transmission based on the TCI state.

It should be noted that the above apparatus embodiments are obtained based on the method embodiments, and their detailed descriptions may be found in those of the method embodiments, and will not be repeated herein.

Referring to FIG. 19, it is a structural block diagram illustrating a communication device 1900 according to an embodiment of the disclosure. The communication device 1900 may be a network device, a terminal, or a chip, a chip system or a processor that supports the network device to realize the above-described methods, or a chip, a chip system or a processor that supports the terminal to realize the above-described methods. The device may be configured to realize the methods described in the above method embodiments, and for details, please refer to the descriptions of the above-described method embodiments.

The communication device 1900 may include one or more processors 1901. The processor 1901 may be a general purpose processor or a dedicated processor, such as, a baseband processor or a central processor. The baseband processor is configured to process a communication protocol and communication data. The central processor is configured to control the communication device (e.g., a base station, a baseband chip, a terminal, a terminal chip, a CU or a DU), to executing a computer program, and to process data of the computer program.

Optionally, the communication device 1900 may include one or more memories 1902 on which a computer program 1904 may be stored. The processor 1901 executes the computer program 1904 to cause the communication device 1900 to perform the methods described in the above method embodiments. Optionally, data may also be stored in the memory 1902. The communication device 1900 and the memory 1902 may be provided separately or may be integrated together.

Optionally, the communication device 1900 may also include a transceiver 1905 and an antenna 1906. The transceiver 1905 may be referred to as a transceiver unit, a transceiver machine, or a transceiver circuit, for realizing a receiving and sending function. The transceiver 1905 may include a receiver and a sender. The receiver may be referred to as a receiver machine or a receiving circuit, for realizing a receiving function. The sender may be referred to as a sending machine or sending circuit, for realizing the sending function.

Optionally, the communication device 1900 may also include one or more interface circuits 1907. The interface circuits 1907 are configured to receive code instructions and transmit the code instructions to the processor 1901. The code instructions are executed by the processor 1901 to cause the communication device 1900 to perform the method described in the method embodiments.

The communication device 1900 is a terminal. The transceiver 1905 is configured to perform the step 201 and the step 202 in FIG. 2, the step 301 and the step 302 in FIG. 3, the step 401 and the step 402 in FIG. 4, the step 501 and the step 502 in FIG. 5, the step 601 and the step 602 in FIG. 6, the step 701 and the step 702 in FIG. 7, the step 801 and the step 802 in FIG. 8, the step 901 and the step 902 in FIG. 9, and etc.

The communication device 1900 is a network device. The processor 1901 is configured to perform the step 1003 in FIG. 10, the step 1103 in FIG. 11, the step 1203 in FIG. 12, the step 1303 in FIG. 13, the step 1403 in FIG. 14, the step 1503 and the step 1504 in FIG. 15, the step 1603 and the step 1604 in FIG. 16, the step 1703 and the step 1704 in FIG. 17, and etc.

In an implementation, the processor 1901 may include a transceiver for implementing the receiving and sending function. For example, the transceiver may be a transceiver circuit, an interface, or an interface circuit. The transceiver circuit, interface, or interface circuitry for implementing the receiving and sending function may be separated, or may be integrated together. The transceiver circuit, interface, or interface circuit described above may be configured for reading and writing of code/data, or may be configured for signal sending or delivery.

In an implementation, the processor 1901 may store the computer program 1903. The processor 1901 executes the computer program 1903 to cause the communication device 190 to perform the methods described in the above method embodiments. The computer program 1903 may be solidified in the processor 1901, in which case the processor 1901 may be implemented by hardware.

In an implementation, the communication device 1900 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the terminal (such as the terminal in the above method embodiments), but a scope of the communication device described in the disclosure is not limited herein, and a structure of the communication device may not be limited by FIG. 19. The communication device may be a stand-alone device or may be part of a larger device. For example the communication device may be:
(1) a stand-alone IC, a chip, a chip system or a subsystem;
(2) a collection of ICs including one or more ICs, where optionally, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

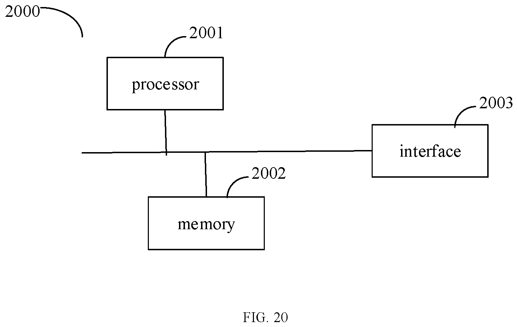

For the case where the communication device may be the chip or the chip system, please refer to the structural block diagram of the chip illustrated in FIG. 20. The chip illustrated in FIG. 20 includes a processor 2001 and an interface 2003. There may be one or more processors 2001, and there may be a plurality of interfaces 2003.

For the case where the chip is configured to implement the functions of the terminal in the embodiments of the disclosure, the interface 2003 is configured to perform the step 201 and the step 202 in FIG. 2, the step 301 and the step 302 in FIG. 3, the step 401 and the step 402 in FIG. 4, the step 501 and the step 502 in FIG. 5, the step 601 and the step 602 in FIG. 6, the step 701 and the step 702 in FIG. 7, the step 801 and the step 802 in FIG. 8, the step 901 and the step 902 in FIG. 9, and etc.

For the case where the chip is configured to implement the functions of the network device in the embodiments of the disclosure, the interface 2003 is configured to perform the step 1001 and the step 1002 in FIG. 10, the step 1101 and the step 1102 in FIG. 11, the step 1201 and the step 1202 in FIG. 12, the step 1301 and the step 1302 in FIG. 13, the step 1401 and the step 1402 in FIG. 14, the step 1501 and the step 1502 in FIG. 15, the step 1601 and the step 1602 in FIG. 16, the step 1701 and the step 1702 in FIG. 17, and etc.

Optionally, the chip further includes a memory 2003 configured to store necessary computer programs and data.

It may be understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as going beyond the scope of protection of embodiments of the disclosure.

The disclosure also provides a readable storage medium for storing instructions. When the instructions are executed by a computer, the functions of any of the method embodiments described above are implemented.

The disclosure also provides a computer program product. When the computer program product is executed by a computer, the functions of any of the method embodiments described above are implemented.

The above embodiments may be implemented in whole or in part by software, hardware, firmware, or any combination of them. When implemented using software, the above embodiments may be implemented, in whole or in part, in the form of the computer program product. The computer program product includes one or more computer programs. When the computer program is loaded and executed on the computer, all or part of the processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any available medium to which the computer has access to or a data storage device such as a server and a data center integrated by one or more available media. The available medium may be a magnetic medium (e.g., a floppy disk, a hard disk, and a tape), an optical medium (e.g., a high-density digital video disc (DVD)), or a semiconductor medium (e.g., a solid state disk (SSD)).

It may be understood that the term "a plurality of" in the disclosure refers to two or more than two, and other quantifiers are used similarly. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after the character "/" are in an "or" relationship. The singular forms "a/an", "said" and "the" are also intended to include the plural forms unless the context clearly dictates otherwise.

It may be further understood that although the operations are described in a specific order in the drawings according to the embodiments of the disclosure, it should not be understood as requiring that these operations be performed in the specific order illustrated or in a serial order, or that perform all the operations illustrated to obtain the desired result. In certain circumstances, multitasking and parallel processing may be advantageous.

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "a plurality of" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure may be configured or may be predefined. The values of information in the tables are merely examples and may be configured to other values, which are not limited in the disclosure. In configuring the correspondence between the information and the parameters, there does not require that all the correspondences illustrated in the tables must be configured. For example, the correspondences illustrated in some rows of the tables may be not configured. For example, the above tables may be adjusted appropriately, such as splitting, merging, and the like. The names of the parameters illustrated in the headings of the above tables may be other names that are understood by the communication device, and the values or representations of the parameters may be other values or expressions that are understood by the communication device. Each of the above tables may also be implemented with other data structures, such as, arrays, queues, containers, stacks, linear tables, pointers, chained lists, trees, graphs, structures, classes, heaps, and hash tables.

The term "pre-defined" in the disclosure may be understood as defined, pre-defined, stored, pre-stored, pre-negotiated, pre-configured, solidified, or pre-fired.

Those skilled in the art may realize that the units and algorithmic steps of the various examples described in combination with the embodiments disclosed herein are capable of being implemented in the form of the electronic hardware, or a combination of the computer software and the electronic hardware. Whether these functions are performed in the hardware or software depends on the particular application and design constraints of the technical solution. Those skilled in the art may use different ways to implement the described functions for each particular application, but such implementations should not be considered as beyond the scope of the disclosure.

It may be clearly understood by those skilled in the art that, for the convenience and brevity of description, detailed work processes of the systems, apparatuses, and units described above may be referred to the corresponding processes in the above method embodiments, which are not be repeated here.

Other implementations of the embodiments of the disclosure will be readily apparent to those skilled in the art from consideration of the specification and practice of the disclosure disclosed herein. This disclosure is intended to cover any modification, use or adaptation of the embodiments of the disclosure, these modifications, uses or adaptations follow the general principles of the embodiments of the disclosure and include common knowledge or common technical means in the art that are not disclosed herein . The specification and examples are to be considered exemplary only, with a true scope and spirit of the embodiments of the disclosure being indicated by the following claims.

The above is only detailed implementations of the disclosure, but the scope of protection of the disclosure is not limited herein. Those skilled in the art familiar to the technical field may easily think of changes or substitutions in the technical scope disclosed by the disclosure, which shall be covered by the scope of protection of the disclosure. Thus, the scope of protection of the disclosure shall be based on the scope of protection of the appended claims.

## Claims

1. A method for determining application time of a transmission configuration indication (TCI) state, performed by a terminal, comprising:
receiving first indication information, wherein the first indication information indicates at least one first TCI state and/or at least one pair of first TCI states;
receiving second indication information, wherein the second indication information indicates a second TCI state used by transmission of a designated channel and/or a designated signal, and the second TCI state is a part or all of the first TCI states; and
determining application time of the second TCI state.

2. The method according to claim 1, wherein the designated channel comprises at least one of:
a physical downlink control channel (PDCCH), a physical downlink shared channel (PDSCH), a physical uplink control channel (PUCCH), or a physical uplink shared channel (PUSCH).

3. The method according to claim 1, wherein the second indication information is carried in downlink control information (DCI) or a medium access control (MAC) control element (CE).

4. The method according to claim 3, wherein determining the application time of the second TCI state comprises:
in response to the second indication information being carried in a first MAC CE, determining that the application time is located after a first designated number of slots following a slot occupied by a first PUCCH corresponding to a first hybrid automatic repeat request acknowledge (HARQ ACK), wherein the first HARQ ACK is a HARQ ACK for the first MAC CE.

5. The method according to claim 4, wherein the first indication information is carried in the first MAC CE, application time of the first TCI state is the same as or different from the application time of the second TCI state.

6. The method according to claim 4, further comprising:
determining, based on a sub-carrier spacing (SCS) of the first PUCCH, the first designated number.

7. The method according to claim 3, wherein determining the application time of the second TCI state comprises:
in response to the second indication information being carried in first DCI, determining that the application time is located after a second designated number of symbols following the first DCI; or,
in response to the second indication information being carried in the first DCI, determining that the application time is located after a third designated number of symbols following a PUCCH or a PUSCH corresponding to a second HARQ ACK feedback, wherein the second HARQ ACK is a HARQ ACK for the first DCI or a HARQ ACK for a PDSCH scheduled by the first DCI; or,
in response to the second indication information being carried in the first DCI, determining that the application time is located after a fourth designated number of symbols following a last symbol of a PUCCH or a PUSCH corresponding to confirmation information, wherein the confirmation information is a PUSCH scheduled by the first DCI, or an HARQ ACK for the first DCI.

8. The method according to claim 7, wherein the first indication information is carried in the first DCI, application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI, and the fifth designated number is the same as or different from the third designated number.

9. The method according to claim 7, further comprising:
in response to the second indication information suitable for one bandwidth part (BWP), determining, based on an SCS of the one BWP, at least one of the second designated number, the third designated number, or the fourth designated number; or,
in response to the second indication information suitable for a plurality of BWPs, determining, based on a smallest SCS among SCSs corresponding to the plurality of BWPs, at least one of the second designated number, the third designated number or the fourth designated number; or,
in response to the second indication information suitable for a plurality of component carriers (CCs), determining, based on a smallest SCS among SCSs corresponding to BWPs on each of the plurality of CCs, at least one of the second designated number, the third designated number or the fourth designated number.

10. A method for determining application time of a transmission configuration indication (TCI) state, performed by a network device, comprising:
sending first indication information, wherein the first indication information indicates at least one first TCI state and/or at least one pair of first TCI states;
sending second indication information, wherein the second indication information indicates a second TCI state used by transmission of a designated channel and/or a designated signal, and the second TCI state is a part or all of the first TCI states; and
determining application time of the second TCI state.

11. The method according to claim 10, wherein the designated channel comprises at least one of:
a physical downlink control channel (PDCCH), a physical downlink shared channel (PDSCH), a physical uplink control channel (PUCCH), or a physical uplink shared channel (PUSCH).

12. The method according to claim 10, wherein the second indication information is carried in downlink control information (DCI) or a medium access control (MAC) control element (CE).

13. The method according to claim 12, wherein determining the application time of the second TCI state comprises:
in response to the second indication information being carried in a first MAC CE, determining that the application time is located after a first designated number of slots following a slot occupied by a first PUCCH corresponding to a first hybrid automatic repeat request acknowledge (HARQ ACK), wherein the first HARQ ACK is a HARQ ACK for the first MAC CE.

14. The method according to claim 13, wherein the first indication information is carried in the first MAC CE, application time of the first TCI state is the same as or different from the application time of the second TCI state.

15. The method according to claim 13, further comprising:
determining, based on a sub-carrier spacing (SCS) of the first PUCCH, the first designated number.

16. The method according to claim 12, wherein determining the application time of the second TCI state comprises:
in response to the second indication information being carried in first DCI, determining that the application time is located after a second designated number of symbols following the first DCI; or,
in response to the second indication information being carried in the first DCI, determining that the application time is located after a third designated number of symbols following a PUCCH or a PUSCH corresponding to a second HARQ ACK feedback, wherein the second HARQ ACK is a HARQ ACK for the first DCI or a HARQ ACK for a PDSCH scheduled by the first DCI; or,
in response to the second indication information being carried in the first DCI, determining that the application time is located after a fourth designated number of symbols following a last symbol of a PUCCH or a PUSCH corresponding to confirmation information, wherein the confirmation information is a PUSCH scheduled by the first DCI, or an HARQ ACK for the first DCI.

17. The method according to claim 16, wherein the first indication information is carried in the first DCI, application time of the first TCI state is located after a fifth designated number of symbols following the PUCCH or the PUSCH corresponding to the second HARQ ACK feedback, the second HARQ ACK is the HARQ ACK for the first DCI or the HARQ ACK for the PDSCH scheduled by the first DCI, and the fifth designated number is the same as or different from the third designated number.

18. The method according to claim 16, further comprising:
in response to the second indication information suitable for one bandwidth part (BWP), determining, based on an SCS of the one BWP, at least one of the second designated number, the third designated number, or the fourth designated number; or,
in response to the second indication information suitable for a plurality of BWPs, determining, based on a smallest SCS among SCSs corresponding to the plurality of BWPs, at least one of the second designated number, the third designated number or the fourth designated number; or,
in response to the second indication information suitable for a plurality of component carriers (CCs), determining, based on a smallest SCS among SCSs corresponding to BWPs on each of the plurality of CCs, at least one of the second designated number, the third designated number or the fourth designated number.

19. An communication apparatus, comprising:
a transceiver module, configured to receive first indication information, wherein the first indication information indicates at least one first TCI state and/or at least one pair of first TCI states;
wherein the transceiver module is configured to receive second indication information, wherein the second indication information indicates a second TCI state used by transmission of a designated channel and/or a designated signal, and the second TCI state is a part or all of the first TCI states; and
a processing module, configured to determine application time of the second TCI state.

20. An communication apparatus, comprising:
a transceiver module, configured to send first indication information, wherein the first indication information indicates at least one first TCI state and/or at least one pair of first TCI states;
wherein the transceiver module is configured to send second indication information, wherein the second indication information indicates a second TCI state used by transmission of a designated channel and/or a designated signal, and the second TCI state is a part or all of the first TCI states; and
a processing module, configured to determine application time of the second TCI state.

21. A communication device, comprising a processor and a memory wherein the memory stores a computer program, and when the computer program is executed by the processor, the method of any one of claims 1 to 9 is implemented, or the method of any one of claims 10 to 18 is implemented.

22. A computer-readable storage medium, configured to store instructions, wherein when the instructions are executed, the method of any one of claims 1 to 9 or the method of any one of claims 10 to 18 is implemented.
